(19) Europäisches Patentamt
European Patent Office
Office européen des brevets

(11) EP 4 091 836 B1

(12) EUROPEAN PATENT SPECIFICATION

(45) Date of publication and mention of the grant of the patent:
**21.02.2024 Bulletin 2024/08**

(21) Application number: **22172306.7**

(22) Date of filing: **09.05.2022**

(51) International Patent Classification (IPC):
***B60C 1/00*** $^{(2006.01)}$ ***C08L 9/00*** $^{(2006.01)}$

(52) Cooperative Patent Classification (CPC):
(C-Sets available)
**B60C 1/0016; C08L 9/00;** B60C 2200/04;
Y02T 10/86 (Cont.)

(54) **PASSENGER CAR TIRE RUBBER COMPOSITION AND PASSENGER CAR TIRE**

PKW-REIFENKAUTSCHUKZUSAMMENSETZUNG UND PKW-REIFEN

COMPOSITION DE CAOUTCHOUC POUR PNEU DE VOITURE DE TOURISME ET PNEU DE VOITURE DE TOURISME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2021 JP 2021086444**

(43) Date of publication of application:
**23.11.2022 Bulletin 2022/47**

(73) Proprietor: **Sumitomo Rubber Industries, Ltd.**
**Kobe-shi, Hyogo-ken 651-0072 (JP)**

(72) Inventors:
- **KITAGO, Ryota**
**Kobe-shi, 651-0072 (JP)**
- **HIRAO, Shogo**
**Kobe-shi, 651-0072 (JP)**
- **YOKOYAMA, Yuka**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 868 697 US-A1- 2015 266 988**

Remarks:
The complete document including Reference Table(s) and the Sequence Listing(s) can be downloaded from the EPO website

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/00, C08L 25/16, C08L 91/00, C08L 7/00, C08K 3/04, C08K 3/36, C08K 5/548, C08K 3/22, C08K 3/22, C08K 5/18, C08K 5/3437, C08K 3/06, C08K 5/47, C08K 5/31;**
**C08L 9/00, C08L 25/16, C08L 91/00, C08L 19/003, C08K 3/04, C08K 3/36, C08K 5/548, C08K 3/22, C08K 3/22, C08K 5/18, C08K 5/3437, C08K 3/06, C08K 5/47, C08K 5/31;**
**C08L 9/00, C08L 45/00, C08L 91/00, C08K 3/04, C08K 3/36, C08K 5/548, C08K 3/22, C08K 3/22, C08K 5/18, C08K 5/3437, C08K 3/06, C08K 5/47, C08K 5/31;**
**C08L 9/00, C08L 47/00, C08L 91/00, C08K 3/04, C08K 3/36, C08K 5/548, C08K 3/22, C08K 3/22, C08K 5/18, C08K 5/3437, C08K 3/06, C08K 5/47, C08K 5/31;**
**C08L 9/00, C08L 57/02, C08L 91/00, C08K 3/04, C08K 3/36, C08K 5/548, C08K 3/22, C08K 3/22, C08K 5/18, C08K 5/3437, C08K 3/06, C08K 5/47, C08K 5/31;**
**C08L 9/00, C08L 93/04, C08L 91/00, C08K 3/04, C08K 3/36, C08K 5/548, C08K 3/22, C08K 3/22, C08K 5/18, C08K 5/3437, C08K 3/06, C08K 5/47, C08K 5/31**

**Description**

TECHNICAL FIELD

The present invention relates to a passenger car tire rubber composition and a passenger car tire.

BACKGROUND ART

Due to environmental and resource depletion problems, various efforts have been made to reduce the use of petroleum resources. For example, techniques using biomass-derived polybutadiene rubbers are known (for example, Patent Literature 1).

CITATION LIST

PATENT LITERATURE

Patent Literature 1: JP 2014-051617 A

SUMMARY OF INVENTION

TECHNICAL PROBLEM

As a result of research and experimentation, however, it has been found that there is still room for improvement to provide a tire rubber composition in which the use of raw materials derived from fossil fuels is reduced in consideration of the environment while also improving the required properties of tires, such as wet grip performance and tensile strength.

The present invention aims to solve the above problem and provide a passenger car tire rubber composition and a passenger car tire which enable a reduction in the use of raw materials derived from fossil fuels in consideration of the environment while also improving the required properties of tires, such as wet grip performance and tensile strength.

SOLUTION TO PROBLEM

The present invention relates to a passenger car tire, including a tire component including a passenger car tire rubber composition,

> the rubber composition having
> a percent modern carbon (pMC) of components based on butadiene and/or aromatic vinyls of 30% or higher as measured in accordance with ASTM D6866-10,
> a butadiene-derived unit content of 80 to 100% by mass based on 100% by mass of total units of rubber components, and
> an aromatic vinyl-derived unit content of 0 to 20% by mass based on 100% by mass of the total units of the rubber components,
> the rubber composition containing 10 to 100 parts by mass of at least one resin per 100 parts by mass of the rubber components.

ADVANTAGEOUS EFFECTS OF INVENTION

The present invention provides a passenger car tire rubber composition which has a percent modern carbon (pMC) of components based on butadiene and/or aromatic vinyls of 30% or higher as measured in accordance with ASTM D6866-10, a butadiene-derived unit content of 80 to 100% by mass based on 100% by mass of the total units of the rubber components, and an aromatic vinyl-derived unit content of 0 to 20% by mass based on 100% by mass of the total units of the rubber components and which contains 10 to 100 parts by mass of at least one resin per 100 parts by mass of the rubber components. Such a passenger car tire rubber composition enables a reduction in the use of raw materials derived from fossil fuels in consideration of the environment while also improving the required properties of tires, such as wet grip performance and tensile strength.

BRIEF DESCRIPTION OF DRAWINGS

Fig. 1 illustrates a simplified schematic view of an apparatus used to produce butadiene.
Fig. 2 illustrates schematic diagrams of constructed plasmids.

DESCRIPTION OF EMBODIMENTS

The passenger car tire rubber composition according to the present invention has a percent modern carbon (pMC) of components based on butadiene and/or aromatic vinyls of 30% or higher as measured in accordance with ASTM D6866-10, a butadiene-derived unit content of 80 to 100% by mass based on 100% by mass of the total units of the rubber components, and an aromatic vinyl-derived unit content of 0 to 20% by mass based on 100% by mass of the total units of the rubber components, and further contains 10 to 100 parts by mass of at least one resin per 100 parts by mass of the rubber components. Thus, the passenger car tire rubber composition enables a reduction in the use of raw materials derived from fossil fuels in consideration of the environment while also improving the required properties of tires, such as wet grip performance and tensile strength.

The rubber composition provides the aforementioned advantageous effect, probably for the following reason.

The rubber components used in the rubber composition are rubber components in which the pMC of components based on butadiene and/or aromatic vinyls is 30% or higher and the butadiene-derived unit content is 80 to 100% by mass based on 100% by mass of the total units of the rubber components, namely, in which the biomass ratio of components based on butadiene and/or aromatic vinyls is high, and further the butadiene-derived unit content is high. The use of such rubber components allows for a reduction in the use of raw materials derived from fossil fuels in consideration of the environment.

Moreover, when a resin is combined with the rubber components in which the biomass ratio of components based on butadiene and/or aromatic vinyls is high, and further the butadiene-derived unit content is high, the overall performance in terms of wet grip performance and tensile strength (expressed as the sum of two indices of wet grip performance and tensile strength) can be synergistically improved.

Although the details are not clear, this is believed to be because, since the rubber components include a rubber formed from biomass-derived butadiene or aromatic vinyls which contain ultratrace impurities, unlike petroleum resource-derived ones, the impurities may interact with the resin to reinforce the domain of the resin, leading to a synergistic advantageous effect.

The term "pMC" refers to the ratio of the $^{14}C$ content of a sample to that of a modern carbon standard (modern standard reference). Herein, this value is used as an index indicative of the biomass ratio of a compound (rubber). The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226,000 years. This means that in the fossil fuels, such as coal, petroleum, and natural gas, which are considered to be at at least 226,000 years after carbon dioxide and the like in the air were taken into and fixed in plants and the like, all the $^{14}C$ atoms which had been contained in these materials at the beginning of fixation have been decayed. Hence, in the current 21st century, the fossil fuels, such as coal, petroleum, and natural gas, contain no $^{14}C$ atoms. Accordingly, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are being cycled in the current environment is about $1 \times 10^{-12}$ mol% of the total of C atoms, as described above. Therefore, such a difference in amount may be used to calculate the percentage (biomass ratio) of compounds derived from natural resources (compounds derived from biomass resources) in a compound (rubber).

The amount of $^{14}C$ is generally determined as follows. $^{13}C$ content ($^{13}C/^{12}C$) and $^{14}C$ content ($^{14}C/^{12}C$) are determined using tandem accelerator-based mass spectrometry. In the measurement, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and then corrected for decay between 1950 AD and the measurement date. This corrected value is taken as the standard $^{14}C$ content (100%). The ratio between this value and the actual measurement value of a sample is herein defined as pMC.

Thus, a rubber formed from 100% materials derived from biomass (natural materials) is expected to have about 110 pMC although there are some differences such as regional differences (currently, such materials often fail to exhibit a value of 100 in usual conditions). On the other hand, the $^{14}C$ content of chemical materials derived from fossil fuels, such as petroleum, measured is expected to be substantially 0 pMC (for example, 0.3 pMC). This value corresponds to a biomass ratio of 0% as mentioned above.

Accordingly, materials (e.g., rubber) with a high pMC i.e., materials (e.g., rubber) with a high biomass ratio can suitably be used in passenger car tire rubber compositions for environmental protection.

(Rubber component)

In the passenger car tire rubber composition, the percent modern carbon (pMC) of components based on butadiene and/or aromatic vinyls of the rubber components measured in accordance with ASTM D6866-10 (which indicates the biomass ratio of components based on butadiene and/or aromatic vinyls) is 30% or higher, preferably 40% or higher, more preferably 50% or higher, still more preferably 60% or higher, particularly preferably 70% or higher, most preferably 80% or higher, still most preferably 90% or higher, further most preferably 100% or higher. The upper limit is not limited. A higher pMC is preferred in order to more suitably achieve the advantageous effect. Since the pMC is calculated relative to the standard material, as described above, the pMC may be higher than 100%.

Herein, the pMC of components based on butadiene and/or aromatic vinyls of the rubber components means the total pMC of the components based on butadiene and/or components based on aromatic vinyls in the rubber components.

Herein, the term "components based on butadiene" refers to structural units in a polymer formed based on butadiene monomers, and the term "components based on aromatic vinyls" refers to structural units in a polymer formed based on aromatic vinyl monomers.

In the passenger car tire rubber composition, the percent modern carbon (pMC) of components based on butadiene of the rubber components measured in accordance with ASTM D6866-10 (which indicates the biomass ratio of components based on butadiene) is preferably 30% or higher, more preferably 40% or higher, still more preferably 50% or higher, particularly preferably 60% or higher, most preferably 70% or higher, still most preferably 80% or higher, further most preferably 90% or higher, particularly most preferably 100% or higher. The upper limit is not limited. A higher pMC is preferred in order to more suitably achieve the advantageous effect. Since the pMC is calculated relative to the standard material, as described above, the pMC may be higher than 100%.

In the passenger car tire rubber composition, the percent modern carbon (pMC) of the rubber components as a whole measured in accordance with ASTM D6866-10 (which indicates the biomass ratio of the rubber components as a whole) is preferably 30% or higher, more preferably 40% or higher, still more preferably 50% or higher, particularly preferably 60% or higher, most preferably 70% or higher, still most preferably 80% or higher, further most preferably 90% or higher, particularly most preferably 100% or higher. The upper limit is not limited. A higher pMC is preferred in order to more suitably achieve the advantageous effect. Since the pMC is calculated relative to the standard material, as described above, the pMC may be higher than 100%.

Herein, the pMC of the components is measured in accordance with ASTM D6866-10. Specifically, it can be measured as described in EXAMPLES.

As described in EXAMPLES, analysis of the $^{14}C$ content of the components of materials such as rubber requires pretreatment of the components of materials such as rubber. Specifically, the carbon atoms contained in the components of materials such as rubber are oxidized and fully converted to carbon dioxide. Further, after the resulting carbon dioxide is separated from water and nitrogen, the carbon dioxide needs to be reduced and converted to graphite (solid carbon). Then, the resulting graphite is irradiated with cations such as $Cs^+$ to generate carbon anions. The carbon ions are accelerated using a tandem accelerator to convert the anions to cations by charge exchange reaction. The orbitals of $^{12}C^{3+}$, $^{13}C^{3+}$, and $^{14}C^{3+}$ are separated using a mass analysis electromagnet, and $^{14}C^{3+}$ can be measured with an electrostatic analyzer.

Herein, biomass may also be referred to as biomass resource.

The pMCs of the components based on butadiene and components based on aromatic vinyls may be adjusted within the respective ranges, for example, by using a polymer synthesized from biomass-derived butadiene or biomass-derived aromatic vinyls (for example, biomass-derived styrene) as monomer.

The pMC of the rubber components as a whole may be adjusted to the range by, in addition to the above methods, using natural rubber or a polymer synthesized from a biomass-derived monomer (for example, biomass-derived isoprene) as monomer.

The materials (monomers of rubbers, fillers, resins, etc.) of conventional tire rubber compositions need to be produced by large scale apparatuses, and most of them are produced at large plants in specific areas. Thus, a lot of energy is supposed to be used for storage and transportation of raw materials and products. For bio materials, in contrast, many local agricultural or forestry raw materials can be used and the production can also be performed by techniques such as microorganism fermentation or catalytic reaction even on a small scale. They can utilize local products and wastes without requiring energy to transport and store the raw materials of the materials from a distance. Further, the produced materials in many cases do not require long transportation to tire plants and subsequent storage. Thus, an overall environmentally friendly effect can be obtained in tire production.

Moreover, a biomass-derived rubber having the same level of performance as when conventional synthetic rubber is used can be produced by appropriately selecting the ratio between biomass-derived and petroleum resource-derived monomers according to the comprehensive environmental needs at the time of the production of the rubber composition, including biomass resource supply situation, petroleum resource (e.g., petroleum resource-derived monomer) supply situation, and/or market needs (e.g., the trend of competition with the demand for biomass resources as food), and then polymerizing biomass-derived monomers or a combination of biomass-derived and petroleum resource-derived monomers in the appropriately selected ratio.

Herein, the term "rubber component" refers to a component that can contribute to crosslinking and generally has a weight average molecular weight (Mw) of 10,000 or more.

The weight average molecular weight of the rubber component is preferably 50,000 or more, more preferably 150,000 or more, still more preferably 200,000 or more, but is preferably 2,000,000 or less, more preferably 1,500,000 or less, still more preferably 1,300,000 or less. When the weight average molecular weight is within the range indicated above, the advantageous effect tends to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

In the passenger car tire rubber composition, the butadiene-derived unit content based on 100% by mass of the total units of the rubber components is 80 to 100% by mass. The lower limit is preferably 85% by mass or more, more preferably 90% by mass or more. The upper limit is preferably 99% by mass or less, more preferably 97% by mass or less. When the content is within the range indicated above, the advantageous effect tends to be better achieved.

In the passenger car tire rubber composition, the aromatic vinyl-derived unit content based on 100% by mass of the total units of the rubber components is 0 to 20% by mass. The lower limit is preferably 1% by mass or more, more preferably 3% by mass or more. The upper limit is preferably 19% by mass or less, more preferably 15% by mass or less, still more preferably 10% by mass or less, particularly preferably 8% by mass or less. When the content is within the range indicated above, the advantageous effect tends to be better achieved.

In the passenger car tire rubber composition, the isoprene-derived unit content based on 100% by mass of the total units of the rubber components is preferably 1 to 10% by mass. The lower limit is preferably 1% by mass or more, more preferably 3% by mass or more. The upper limit is preferably 7% by mass or less. When the content is within the range indicated above, the advantageous effect tends to be better achieved.

In the passenger car tire rubber composition, the content of butadiene-derived units whose double bonds are in cis configuration based on 100% by mass of the total units of the rubber components is preferably 5 to 100% by mass. The lower limit is preferably 10% by mass or more, more preferably 30% by mass or more, still more preferably 50% by mass or more, particularly preferably 70% by mass or more, most preferably 80% by mass or more, further most preferably 85% by mass or more, still further most preferably 90% by mass or more. The upper limit is preferably 99% by mass or less. When the content is within the range indicated above, the advantageous effect tends to be better achieved.

Herein, the term "unit" refers to a structural unit of a polymer. The term "butadiene-derived unit" refers to a structural unit in a polymer formed based on butadiene monomer. The term "aromatic vinyl-derived unit" refers to a structural unit in a polymer formed based on an aromatic vinyl monomer. The term "isoprene-derived unit" refers to a structural unit in a polymer formed based on isoprene monomer, including an isoprene unit in natural rubber.

Herein, the respective unit contents are measured by NMR.

The unit contents in the rubber composition may be adjusted within the respective ranges, for example, by using an appropriate combination of polybutadiene rubbers (BR), aromatic vinyl/butadiene copolymers (for example, styrene-butadiene rubbers (SBR)), and/or isoprene-based rubbers.

Non-limiting examples of the BR include high-cis BR, low-cis BR, and syndiotactic polybutadiene crystal-containing BR. Examples of commercial products include those available from Ube Industries, Ltd., JSR Corporation, Asahi Kasei Corporation, Zeon Corporation, etc. These may be used alone or in combinations of two or more.

The cis content of the BR is preferably 30% by mass or higher, more preferably 50% by mass or higher, still more preferably 70% by mass or higher, particularly preferably 90% by mass or higher. The upper limit is not limited. When the cis content is within the range indicated above, the advantageous effect tends to be better achieved.

The cis content of the BR can be measured by NMR.

The amount of BR based on 100% by mass of the rubber components is preferably 70% by mass or more, more preferably 80% by mass or more, still more preferably 85% by mass or more, particularly preferably 90% by mass or more, but is preferably 100% by mass or less, more preferably 99% by mass or less, still more preferably 97% by mass or less. When the amount is within the range indicated above, the advantageous effect tends to be better achieved.

Non-limiting examples of the aromatic vinyl/butadiene copolymers (for example, SBR) include emulsion-polymerized aromatic vinyl/butadiene copolymers (for example, emulsion-polymerized styrene-butadiene rubbers (E-SBR)) and solution-polymerized aromatic vinyl/butadiene copolymers (for example, solution-polymerized styrene-butadiene rubbers (S-SBR)). Examples of commercial products include those available from Sumitomo Chemical Co., Ltd., JSR Corporation, Asahi Kasei Corporation, Zeon Corporation, etc. These may be used alone or in combinations of two or more.

Examples of aromatic vinyls (aromatic vinyl monomers) include styrene, vinylnaphthalene, and divinylnaphthalene. These may be used alone or in combinations of two or more. Styrene (in particular, biomass-derived styrene) is preferred among these. In other words, SBR is preferred among the aromatic vinyl/butadiene copolymers. The styrene may be substituted.

The aromatic vinyl content (aromatic vinyl-derived unit content, preferably styrene content) of the aromatic vinyl/butadiene copolymers is preferably 5% by mass or higher, but is preferably 60% by mass or lower, more preferably 50% by mass or lower, still more preferably 40% by mass or lower, particularly preferably 30% by mass or lower, most preferably 20% by mass or lower, further most preferably 10% by mass or lower. When the aromatic vinyl content is within the range indicated above, the advantageous effect tends to be better achieved.

Herein, the aromatic vinyl content (preferably, styrene content) of rubbers is determined by $^{1}$H-NMR analysis.

The amount of aromatic vinyl/butadiene copolymers (preferably, SBR) based on 100% by mass of the rubber components is preferably 1% by mass or more, more preferably 5% by mass or more, still more preferably 10% by mass or more, particularly preferably 15% by mass or more, but is preferably 20% by mass or less. When the amount is within the range indicated above, the advantageous effect tends to be better achieved.

Examples of the isoprene-based rubbers include natural rubbers (NR), polyisoprene rubbers (IR), refined NR, modified NR, and modified IR. Examples of the NR include those commonly used in the tire industry such as SIR20, RSS#3, and TSR20. Non-limiting examples of the IR include those commonly used in the tire industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more. NR is preferred among these.

The amount of isoprene-based rubbers (preferably, natural rubbers) based on 100% by mass of the rubber components is preferably 0.1% by mass or more, more preferably 1% by mass or more, still more preferably 3% by mass or more, but is preferably 10% by mass or less, more preferably 7% by mass or less. When the amount is within the range indicated above, the advantageous effect tends to be better achieved.

Examples of usable rubber components other than the BR, aromatic vinyl/butadiene copolymers (for example, SBR), and isoprene-based rubbers include diene rubbers such as acrylonitrile-butadiene rubbers (NBR), chloroprene rubbers (CR), butyl rubbers (IIR), and styrene-isoprene-butadiene copolymer rubbers (SIBR). Each of these rubber components may be used alone, or two or more of these may be used in combination.

The rubber components may be modified to introduce a functional group interactive with filler such as silica.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxy, nitrile, pyridyl, alkoxy, hydroxy, oxy, and epoxy groups. These functional groups may be substituted. These may be used alone or in combinations of two or more. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Specific examples of the compound (modifier) having the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combinations of two or more.

The pMCs of the components based on butadiene and components based on aromatic vinyls may be adjusted within the respective ranges, for example, by using a polymer synthesized from biomass-derived butadiene or biomass-derived aromatic vinyls (for example, biomass-derived styrene) as monomer, as described above.

Specifically, biomass-derived polybutadiene rubbers (BBR) synthesized from biomass-derived butadiene or biomass-derived aromatic vinyl/butadiene copolymers (for example, biomass-derived styrene-butadiene rubbers (BSBR)) synthesized from biomass-derived butadiene and biomass-derived aromatic vinyls (for example, biomass-derived styrene) may be used.

The biomass-derived polybutadiene rubbers (BBR) and biomass-derived aromatic vinyl/butadiene copolymers (for example, biomass-derived styrene-butadiene rubbers (BSBR)) encompass not only those polymerized from butadiene and the like by conventional methods, but also those produced by reactions using microorganisms, plants, animals, or tissue cultures thereof (hereinafter, also referred to as microorganisms or the like) or by enzymatic reactions.

Moreover, any biomass-derived rubber may be used that is produced by polymerizing aromatic vinyls and/or butadiene as monomer to satisfy the above-specified pMC. At least one of the aromatic vinyl and butadiene monomers needs to be derived from biomass (a biomass-derived monomer). Preferably, both the aromatic vinyl and butadiene monomers are biomass-derived monomers.

Moreover, biomass-derived and petroleum resource-derived monomers may be combined as long as the above-specified pMC is satisfied. Specifically, biomass-derived butadiene may be used in combination with butadiene other than the biomass-derived butadiene (petroleum resource-derived butadiene). Similarly, biomass-derived aromatic vinyls may be used in combination with aromatic vinyls other than the biomass-derived aromatic vinyls (petroleum resource-derived aromatic vinyls).

Moreover, biomass-derived rubbers may contain structural units derived from additional monomers other than aromatic vinyls and butadiene (copolymerizable monomers such as monoterpenes (e.g., myrcene)) as long as the above-specified pMC is satisfied.

The biomass-derived monomer content based on 100 mol% of the monomers forming the biomass-derived rubber is preferably 50 mol% or higher, more preferably 70 mol% or higher, still more preferably 80 mol% or higher, particularly preferably 90 mol% or higher, most preferably 95 mol% or higher, and may be 100 mol%.

The rubber composition preferably contains, as a biomass-derived rubber, a polybutadiene rubber produced by polymerizing biomass-derived butadiene (biomass polybutadiene rubber (BBR)).

((Method of preparing biomass-derived rubber))

Next, prior to describing methods of preparing biomass-derived rubbers from biomass, the biomass herein will first be explained.

Herein, the term "biomass (biomass resource)" refers to a carbon-neutral organic resource of biological origin. Specific examples of such resources include: those converted to starch, cellulose, or the like and stored; bodies of animals which eat plant bodies to grow up; and products produced by processing plant or animal bodies, but exclude fossil resources.

The biomass resource may be edible or nonedible and is not limited. In consideration of effective use of resources without competing with the demand as food, nonedible raw materials are preferred.

Specific examples of the biomass resource include cellulose crops (e.g., pulp, kenaf, wheat straw, rice straw, wastepaper, and papermaking residues), wood, charcoal, compost, natural rubber, cotton, sugar cane, soy pulp, fats and oils (e.g., rapeseed oil, cottonseed oil, soybean oil, coconut oil, and castor oil), hydrocarbon crops (e.g., corn, tubers, wheat, rice, rice husks, rice bran, old rice, cassava, and sago palm), bagasse, buckwheat, soybean, essential oils (e.g., pine root oil, orange oil, and eucalyptus oil), pulp black liquor, kitchen raw garbage, waste vegetable oils, residues of aquatic products, livestock waste, food waste, algae, and drainage sludge.

The biomass resource may be obtained by treating any of the above resources (i.e., a biomass-derived material). The treatment may be performed by known methods, such as biological treatments based on the activity of, for example, microorganisms, plants, animals, or tissue cultures thereof; chemical treatments using, for example, acids, alkalis, catalysts, thermal energy, or light energy; and physical treatments such as milling, compression, microwave treatment, and electromagnetic treatment.

Moreover, the biomass resource may be refined or extracted from any of the above-mentioned biomass resources and treated biomass resources (i.e., a biomass-derived material). For example, the biomass resource may be any of the saccharides, proteins, amino acids, fatty acids, fatty acid esters, and others refined from biomass resources.

The saccharides may be any biomass-derived one, and examples include sucrose, glucose, trehalose, fructose, lactose, galactose, xylose, allose, talose, gulose, altrose, mannose, idose, arabinose, apiose, maltose, cellulose, starch, and chitin.

The proteins may be any biomass-derived compound that is formed by linking amino acids (preferably L-amino acids), and include oligopeptides such as dipeptides.

The amino acids may be any biomass-derived organic compound containing both amino and carboxy functional groups. Examples include valine, leucine, isoleucine, arginine, lysine, asparagine, glutamine, and phenylalanine. Preferred among these are valine, leucine, isoleucine, arginine, and phenylalanine. The amino acids may be L-amino acids or D-amino acids, preferably L-amino acids because they are present in large quantities in nature and can be easily used as biomass resources.

The fatty acids may be any biomass-derived one, and examples include butyric acid, oleic acid, linoleic acid, palmitic acid, and stearic acid.

The fatty acid esters may be any biomass-derived one, and examples include animal-derived fats, vegetable oils, and modified biomass-derived fats and oils.

The biomass resource may be a mixture of various materials and impurities. To achieve efficient conversion, the saccharide content based on 100% by mass of the biomass is preferably 20% by mass or higher, more preferably 30% by mass or higher, still more preferably 50% by mass or higher. In another embodiment, to achieve efficient conversion, the combined content of amino acids and proteins based on 100% by mass of the biomass is preferably 10% by mass or higher, more preferably 20% by mass or higher, still more preferably 30% by mass or higher. In yet another embodiment, to achieve efficient conversion, the combined content of fatty acids and fatty acid esters based on 100% by mass of the biomass is preferably 10% by mass or higher.

The following will describe methods of preparing biomass-derived rubbers from biomass. A typical example in which the biomass-derived rubber is BSBR is specifically described below. As described above, the BSBR herein includes not only BSBR polymerized from biomass-derived butadiene and styrene by conventional methods, but also BSBR produced by reactions using microorganisms or the like or by enzymatic reactions.

(((Method of preparing butadiene)))

First, methods of preparing butadiene from biomass resources are described, but the preparation of butadiene is not limited to the methods described below.

Butadiene may be prepared from biomass resources by any of various methods. Examples include: biological treatments in which butadiene is directly prepared from biomass resources using at least one selected from the group consisting of microorganisms, plants, animals, and tissue cultures thereof; methods of performing the above-mentioned chemical treatments on biomass resources to prepare butadiene; methods of performing the above-mentioned physical treatments on biomass resources to prepare butadiene; methods of converting biomass resources to butadiene by in-vitro enzymatic reactions or the like; and any combination of the foregoing methods. The microorganisms, plants, and animals which convert biomass resources to butadiene may or may not be genetically engineered.

The direct conversion of biomass resources to butadiene using microorganisms or the like may be accomplished by any method, and can be performed using in-vivo pathways where an amino acid is converted to an alkyl alcohol and/or a hemiterpene.

The amino acid is preferably valine, leucine, isoleucine, or arginine, while the hemiterpene is preferably tiglic acid and/or angelic acid.

In a preferred exemplary method, butadiene may be prepared from an amino acid and/or a hemiterpene using a microorganism, plant, animal, or tissue culture thereof, in which a gene encoding an enzyme having a decarboxylase activity and/or a gene encoding an enzyme having a reductase activity has been introduced and/or modified.

Examples of the enzyme having a decarboxylase activity include diphosphomevalonate decarboxylase (EC 4.1.1.33) and various amino acid decarboxylases. Examples of the enzyme having a reductase activity include HMG-CoA reductase and 12-oxophytodienoate reductase (EC 1.3.1.42).

A preferred exemplary method for producing butadiene by fermentation through an amino acid-mediated in-vivo reaction includes reacting any of various decarboxylases with tiglic acid and/or angelic acid synthesized in vivo from isoleucine through natural metabolic pathways of microorganisms or the like. Alternatively, butadiene may be prepared by decarboxylase reactions using various fatty acid derivatives produced during amino acid metabolism.

Although the amino acid required for preparing butadiene may be directly added to a medium, it is preferred to use a biosynthetic amino acid synthesized in vivo by fermentation of a ground plant, a livestock waste, or the like. This means that butadiene is converted from a saccharide and/or a protein.

General methods of producing alcohols or alkenes by fermentation mainly use saccharides as biomass resources. In contrast, the above production methods have great potential to effectively utilize biomass resources mainly containing amino acids or proteins as well and thus are useful.

In another preferred method of preparing butadiene from a biomass resource, an intermediate capable of being used to synthesize butadiene is prepared from a biomass resource using at least one selected from the group consisting of microorganisms, plants, animals, and tissue cultures thereof, and the intermediate is then subjected to, for example, any of the above-mentioned chemical treatments, such as catalytic reactions, the above-mentioned physical treatments, the above-mentioned in-vitro enzymatic reactions, and combinations of the foregoing methods to prepare butadiene (diene such as butadiene).

Examples of the intermediate capable of being used to synthesize butadiene include alkyl alcohols, allyl alcohols, alkenes, aldehydes, and unsaturated carboxylic acids.

The alkyl alcohols may be any biomass-derived one, preferably ethanol, butanol, or butanediol, more preferably butanol or butanediol. The butanol may be 1-butanol or 2-butanol, or a mixture thereof.

Various methods are known to produce ethanol (biomass resource-derived ethanol is also referred to as bioethanol) or butanol (biomass resource-derived butanol is also referred to as biobutanol) from biomass resources by fermentation using microorganisms or the like. Typical examples include a method of producing bioethanol from a biomass resource (e.g., sugar cane or glucose) by ethanol fermentation using yeast, and a method of producing biobutanol from a biomass resource (e.g., glucose) by acetone-butanol fermentation (ABE fermentation) using a fermentative microbe. In the ABE fermentation method, a mixture of butanol, acetone, and other solvent is obtained, and this mixture can then be distilled to provide biobutanol. Also, butanol may directly be prepared from bioethanol by a catalytic reaction, or may be prepared via acetaldehyde.

The ABE fermentation microorganism may be any microorganism capable of ABE fermentation. Examples include microorganisms of the genera *Escherichia, Zymomonas, Candida, Saccharomyces, Pichia, Streptomyces, Bacillus, Lactobacillus, Corynebacterium, Clostridium,* and *Saccharomyces.* Such a microorganism may be any type of strain, including wild-type and mutant strains, and recombinant strains induced by genetically engineering techniques, such as cell fusion or gene manipulation. Preferred among these microorganisms are microorganisms of the genus *Clostridium,* with *Clostridium acetobutylicum, Clostridium beijerinckii, Clostridium saccharobutylicum,* and *Clostridium saccharoperbutylacetonicum being* more preferred.

For example, a preferred method of producing biobutanol is to produce butanol by fermentation using at least one selected from the group consisting of microorganisms, plants, animals, and tissue cultures thereof, into which has been introduced at least one gene selected from the group consisting of mevalonate pathway-related genes, MEP/DOXP pathway-related genes, butyryl-CoA dehydrogenase encoding gene, butylaldehyde dehydrogenase encoding gene, and butanol dehydrogenase encoding gene (for example, see JP 2010-508017 T, which is hereby incorporated by reference in its entirety).

Ethanol and butanol produced from biomass resources by fermentation are also commercially available as bioethanol and biobutanol (e.g., biobutanol of Du Pont), respectively.

Moreover, various fermentative methods of directly preparing butanediol as a raw material for bioplastics have been developed (for example, Syu M.J., Appl. Microbial Biotechnol. 55:10-18 (2001); Qin et al., Chinese J. Chem. Eng. 14(1) :132-136 (2006); JP 2011-522563 T; JP S62-285779 A; and JP 2010-115116 A, all of which are hereby incorporated by reference in their entirety), and such butanediol can be easily used as bio-derived butanediol. Butanediol may also be prepared by conversion of biomass-derived succinic acid, fumaric acid, furfural, or the like.

The butanediol fermentation microorganism may be any microorganism capable of butanediol fermentation. Examples include microorganisms of the genera *Escherichia, Zymomonas, Candida, Saccharomyces, Pichia, Streptomyces, Bacillus, Lactobacillus, Corynebacterium, Clostridium, Klebsiella,* and *Saccharomyces.* Such a microorganism may be any type of strain, including wild-type and mutant strains, and recombinant strains induced by genetically engineering techniques, such as cell fusion or gene manipulation. Preferred among these microorganisms are microorganisms of the genera *Bacillus, Clostridium,* and *Klebsiella,* with *Clostridium autoethanogenum, Bacillus polymyxa, Bacillus subtilis, Bacillus pumilus, Bacillus macerans, Bacillus licheniformis, Bacillus megaterium,* and *Klebsiella pneumoniae* being more preferred.

The alkyl alcohols may be converted to butadiene, for example, by the above-mentioned biological treatments, such as fermentation, the above-mentioned chemical treatments, such as catalytic reactions, the above-mentioned physical treatments, the above-mentioned in-vitro enzymatic reactions, or any combination of the foregoing methods.

An exemplary known method for directly converting an alkyl alcohol to butadiene includes converting ethanol and/or butanol to butadiene using a dehydration or dehydrogenation catalyst, such as hydroxyapatite, $Ta/SiO_2$, alumina, or zeolite.

The allyl alcohols may be any biomass-derived one. To achieve easy conversion to butadiene, crotyl alcohol or 3-buten-2-ol is preferred.

The crotyl alcohol or 3-buten-2-ol may be directly produced from biomass resources by fermentation using microorganisms or the like, or may be prepared by reducing biomass-derived crotonic acid or its derivatives. Also, the crotyl alcohol may be prepared from biomass-derived butanediol using a catalyst, such as zeolite, alumina, or cerium oxide (for example, see JP 2004-306011 A, which is hereby incorporated by reference in its entirety).

An exemplary method for converting an allyl alcohol to butadiene includes converting crotyl alcohol to butadiene by dehydration using a commonly known catalytic reduction catalyst, such as zeolite or alumina.

The alkenes may be any biomass-derived one, preferably ethylene or butene (also referred to as butylene), more preferably ethylene.

The biomass-derived ethylene and butene may be prepared, for example, by a method of converting bioethanol to ethylene using a dehydration catalyst (e.g., alumina, zeolite) or by high-temperature treatment, and a method of converting biobutanol to butene using a dehydration catalyst (e.g., alumina, zeolite) or by high-temperature treatment, respectively.

The alkenes (ethylene, butene) can also be directly produced from biomass resources by fermentation using at least one selected from the group consisting of microorganisms, plants, animals, and tissue cultures thereof.

In view of productivity, preferred but nonlimiting examples of the ethylene fermentation microorganisms, plants, animals, and tissue cultures thereof are those in which a gene encoding an enzyme having an ACC synthase (ethylene synthase) activity has been introduced and/or modified.

From a carbon neutral standpoint, the ethylene may be produced by a catalytic reaction using carbon dioxide as a raw material, though such ethylene is not the biomass resource-derived one. The method of producing ethylene by a catalytic reaction using carbon dioxide as a raw material may be carried out, for example, but not limited to, as described in JP 2019-154435 A, which is hereby incorporated by reference in its entirety.

Preferred but nonlimiting examples of the butene fermentation microorganisms, plants, animals, and tissue cultures thereof are those in which a gene encoding an enzyme having a diphosphomevalonate decarboxylase (EC 4.1.1.33) activity has been introduced and/or modified (for example, see JP 2011-526489 T, which is hereby incorporated by reference in its entirety).

The alkenes may be converted to butadiene, for example, by a method of converting butene to butadiene using alumina, zeolite, or the like, or by a method of partially converting ethylene to acetaldehyde using an oxidation catalyst such as palladium chloride or palladium acetate, and then subjecting the acetaldehyde to a dehydration reaction with the remaining ethylene using a dehydration catalyst such as alumina or zeolite to prepare butadiene.

The aldehydes may be any biomass-derived one, preferably acetaldehyde.

The acetaldehyde may be directly produced from biomass resources by fermentation using microorganisms or the like, or may be converted from biomass-derived ethylene using an oxidation catalyst such as palladium chloride.

An exemplary method for converting an aldehyde to butadiene includes performing a dehydration reaction with ethylene.

The unsaturated carboxylic acids may be any biomass-derived one, preferably tiglic acid or angelic acid.

The tiglic acid or angelic acid may be directly produced from biomass resources by fermentation using microorganisms or the like. Specifically, tiglic acid or angelic acid can be synthesized in vivo from isoleucine through natural metabolic pathways of microorganisms or the like. Alternatively, they may be refined from croton oil or the like.

The unsaturated carboxylic acids may be converted to butadiene, for example, by a method of reacting tiglic acid or angelic acid with any of various decarboxylases to cause conversion, or by a method of reacting tiglic acid or angelic acid with a metal catalyst (e.g., palladium), zeolite, alumina or the like to cause conversion.

Butadiene can be obtained from biomass resources by the above-mentioned methods or other methods.

(((Method of preparing styrene)))

The following will describe methods of preparing styrene from biomass resources, but the preparation of styrene is not limited to the methods described below.

When aromatic vinyls other than styrene are used, although not limited thereto, the styrene may be further synthesized into the aromatic vinyls other than styrene by known methods.

Styrene may be prepared from biomass resources by any of various methods. Examples include: biological treatments in which styrene is directly prepared from biomass resources using at least one selected from the group consisting of microorganisms, plants, animals, and tissue cultures thereof (particularly, microorganisms, plants, and tissue cultures thereof); methods of performing the above-mentioned chemical treatments on biomass resources to prepare styrene; methods of performing the above-mentioned physical treatments on biomass resources to prepare styrene; methods of converting biomass resources to styrene by in-vitro enzymatic reactions or the like; and any combination of the foregoing methods. Preferred among these are biological treatments. In such production methods, saccharides, which are used as carbon source in a medium, are used as main biomass resources.

The microorganisms, plants, and animals which convert biomass resources to styrene may or may not be genetically engineered.

The direct conversion (biological treatment) of biomass resources to styrene using microorganisms or the like may be accomplished by any method, and can be performed using in-vivo pathways where styrene is biosynthesized from phenylalanine via cinnamic acid.

Phenylalanine is a material biosynthesized through a shikimic acid pathway present in most of microorganisms or plants. In-vivo pathways are known where styrene is biosynthesized from such phenylalanine via cinnamic acid. Thus, styrene can be directly produced from biomass resources using at least one selected from the group consisting of microorganisms, plants, animals, and tissue cultures thereof (particularly, microorganisms, plants, and tissue cultures thereof) through such an in-vivo pathway thereof.

To achieve efficient production of styrene, the microorganisms, plants, animals, and tissue cultures thereof (particularly, microorganisms, plants, and tissue cultures thereof) are preferably engineered so as to highly express phenylalanine ammonia-lyase, cinnamate decarboxylase (phenylacrylate decarboxylase), and/or phenolic acid decarboxylase (particularly, ferulic acid decarboxylase).

Similarly, to achieve efficient production of styrene, the microorganisms, plants, animals, and tissue cultures thereof (particularly, microorganisms, plants, and tissue cultures thereof) are preferably modified so as to boost the production of (or excessively produce) phenylalanine, which is considered as a substrate in the styrene biosynthesis pathway.

Specifically, the microorganisms, plants, animals, and tissue cultures thereof (particularly, microorganisms, plants, and tissue cultures thereof) are preferably engineered so as to highly express a shikimic acid pathway-related enzyme and/or a feedback inhibition enzyme.

More specifically, it is preferred that the microorganisms, plants, animals, and tissue cultures thereof (particularly, microorganisms, plants, and tissue cultures thereof) highly express a shikimic acid pathway-related enzyme, express an L-phenylalanine biosynthesis pathway-related enzyme on which the feedback inhibition by L-phenylalanine is cancelled, and/or highly express an enzyme on which feedback inhibition is cancelled.

Examples of the shikimic acid pathway-related enzyme include, but are not limited to, arogenate dehydratase, prephenate aminotransferase, prephenate dehydratase, and chorismate mutase.

To achieve efficient production of styrene, it is preferred to add phenylalanine and/or cinnamic acid (preferably biomass-derived phenylalanine and/or cinnamic acid) to a medium for culturing microorganisms or the like (including the soil for cultivating plants). Styrene can be efficiently produced by adding these compounds, which are located upstream of the in-vivo pathway for biosynthesizing styrene. The phenylalanine or cinnamic acid to be added may be prepared by culturing microorganisms or the like.

Non-limiting examples of the microorganisms capable of directly converting biomass resources to styrene include microorganisms of the genera *Fusarium, Penicillium, Pichia, Candida, Debaryomyces, Torulopsis, Saccharomyces, Bacillus, Escherichia, Streptomyces,* and *Pseudomonas.* Such a microorganism may be any type of strain, including wild-type and mutant strains, and recombinant strains induced by genetically engineering techniques, such as cell fusion or gene manipulation.

The microorganisms of the genus *Fusarium* are not limited, but in view of styrene conversion efficiency preferred examples include *F. oxysporum, F. roseum, F. aquasductuum, F. fujikuroi, F. solani, F. graminearum, F. asiaticum,* and *F. culmorum,* with *F. oxysporum* being more preferred.

The microorganisms of the genus *Penicillium* are not limited, but in view of styrene conversion efficiency preferred examples include *P. citrinum, P. oxalicum, P. glabrum, P. chrysogenum, P. digitatum, P. camemberti, P. islandicum, P. verrucosum, P. cyclopium, P. commune, P. citro-viride, P. rugulosum, P. italicum, P. expansum, P. marneffei, P. griseofluvum, P. galaucum, P. roqueforti, P. camemberti, P. natatum,* and *P. gladioli,* with *P. citrinum, P. oxalicum,* and *P. camemberti* being more preferred, with *P. citrinum* being still more preferred.

The microorganisms of the genus *Pichia* are not limited, but in view of styrene conversion efficiency preferred examples include *Pichia carsonii, Pichia anomala, Pichia pastoris, Pichia farinosa, Pichia membranifaciens,* and *Pichia angusta,* with *Pichia carsonii* being more preferred.

The microorganisms of the genus *Candida* are not limited, but in view of styrene conversion efficiency preferred examples include *C. famata, C. etchellsii, C. versatilis,* and *C. stellata,* with *C. famata* being more preferred.

The microorganisms of the genus *Debaryomyces* are not limited, but in view of styrene conversion efficiency preferred examples include *Debaryomyces hansenii.*

The microorganisms of the genus *Torulopsis* are not limited.

The microorganisms of the genus *Saccharomyces* are not limited, but in view of styrene conversion efficiency preferred examples include *S. cerevisiae, S. bayanus,* and *S. boulardii.*

The microorganisms of the genus *Bacillus* are not limited, but in view of styrene conversion efficiency preferred examples include *B. subtilis, B. thuringiensis, B. coagulans, B. licheniformis,* and *B. megaterium,* with *B. subtilis* being more preferred.

The microorganisms of the genus *Escherichia* are not limited, but in view of styrene conversion efficiency preferred examples include *E. albertii, E. blattae, E. coli, E. fergusonii, E. hermannii,* and *E. vulneris,* with *E. coli* being more preferred.

The microorganisms of the genus *Streptomyces* are not limited, but in view of styrene conversion efficiency preferred examples include *S. griseus, S. kanamyceticus, S. peucetius, S. galilaeus, S. parvulus, S. antibioticus, S. lividans,* and *S. maritimus.*

The microorganisms of the genus *Pseudomonas* are not limited, but in view of styrene conversion efficiency preferred examples include *P. aeruginosa, P. syringae* pv. *Japonica, P. meliae,* and *P. putida,* with *P. putida, P. putida* IH-2000, and *P. putida* S12 being more preferred, with *P. putida* IH-2000 or *P. putida* S12 being still more preferred.

Among the microorganisms capable of directly converting biomass resources to styrene, microorganisms of the genus *Penicillium* or *Escherichia* are preferred, with *P. citrinum* or transformed *E. coli* being more preferred.

Non-limiting examples of the plants capable of directly converting biomass resources to styrene include plants of the families *Hamamelidaceae, Styracaceae, Apocynaceae, Solanaceae, Daucus,* and *Theaceae.* Such a plant may be any type of strain, including wild-type and mutant strains, and recombinant strains induced by genetically engineering techniques, such as cell fusion or gene manipulation.

The plants (trees) of the family *Hamamelidaceae* are not limited, but plants (trees) of the genus *Liquidambar* are preferred in view of styrene production efficiency. More preferred among these are *Liquidambar formosana, Liquidambar styraciflua,* and Liquidambar orientalis, with *Liquidambar styraciflua* or *Liquidambar orientalis* being still more preferred, with *Liquidambar styraciflua* being particularly preferred.

The plants (trees) of the family *Styracaceae* are not limited, but plants (trees) of the genus *Styrax* are preferred in view of styrene production efficiency. More preferred among these are *Styrax officinalis, Styrax japonica,* and *Styrax benzoin* Dryander, with *Styrax japonica* being still more preferred.

The plants of the family *Apocynaceae* are not limited, but plants of the genera *Catharanthus, Nerium, Vinca, Allamanda,* and *Ecdysanthera* are preferred in view of styrene production efficiency. More preferred are plants of the genus *Catharanthus* (particularly, *Catharanthus roseus*).

The plants of the family *Solanaceae* are not limited, but plants of the genus *Nicotiana* are preferred in view of styrene production efficiency. More preferred is *N. tabacum or N. rustica.*

The plants of the family *Daucus* are not limited, but plants of the genus *Daucus* are preferred in view of styrene production efficiency.

The plants of the family *Theaceae* are not limited, but plants of the genera *Camellia, Cleyera,* and *Ternstroemia* are preferred in view of styrene production efficiency.

Among the plants capable of directly converting biomass resources to styrene, plants of the families *Hamamelidaceae, Styracaceae,* and *Apocynaceae* are preferred, with plants of the genera *Liquidambar, Styrax,* and *Catharanthus* being more preferred, with *Liquidambar styraciflua, Liquidambar orientalis, Styrax japonica,* and *Catharanthus roseus* being still more preferred, with *Liquidambar styraciflua, Styrax japonica,* and *Catharanthus roseus* being particularly preferred.

When the plants are trees, styrene may be obtained from the trees by any method, but in view of efficiency it is preferably obtained by purifying the resin (sap) exuded from a scratched tree trunk. Alternatively, styrene may also be obtained by grinding the tree bark, trunk, branch, root, leaf, or other portion and subjecting it to, for example, extraction with an appropriate solvent, heating and/or ultrasonic irradiation to obtain volatile components, followed by purification.

When the plants are not trees, although styrene is difficult to obtain as resin, styrene may be obtained by grinding the plant tissue (e.g., stem, leaf, root, flower) and subjecting it to, for example, extraction with an appropriate solvent, heating and/or ultrasonic irradiation to obtain volatile components, followed by purification.

Alternatively, styrene may also be obtained by culturing the plant tissue, subjecting the cultured tissue to, for example, extraction with an appropriate solvent, heating and/or ultrasonic irradiation to obtain volatile components.

The plant tissue to be cultured is not limited, and is preferably a callus induced from a plant tissue section because then styrene can be efficiently obtained. That is, it is preferred to induce a callus from a plant tissue section and culture the induced callus.

The callus may be induced by any method. For example, the callus may be induced by culturing a plant tissue section (e.g., bud, leaf, or stem) in a medium containing a plant growth hormone(s), for example, an auxin plant hormone (e.g., dichlorophenoxyacetic acid) and/or a cytokinin plant hormone (e.g., benzyl adenine).

In another preferred method of preparing styrene from a biomass resource, an intermediate (particularly, phenylalanine and/or cinnamic acid) capable of being used to synthesize styrene is prepared from a biomass resource using at least one selected from the group consisting of microorganisms, plants, animals, and tissue cultures thereof (particularly, microorganisms, plants, and tissue cultures thereof), and the intermediate (particularly, phenylalanine and/or cinnamic acid) is then subjected to, for example, any of the above-mentioned biological treatments, the above-mentioned chemical treatments, such as catalytic reactions, the above-mentioned physical treatments, the above-mentioned in-vitro enzymatic reactions, and combinations of the foregoing methods to prepare styrene. The method preferably includes subjecting the intermediate (particularly, phenylalanine and/or cinnamic acid) to any of the above-mentioned biological treatments, among others.

The microorganisms, plants, and animals which convert the intermediate to styrene may or may not be genetically engineered.

The method of subjecting the intermediate (particularly, phenylalanine and/or cinnamic acid) to any of the above-mentioned biological treatments to prepare styrene may be carried out, for example, by adding phenylalanine and/or cinnamic acid to a medium for culturing the microorganisms or the like (including the soil for cultivating the plants), and culturing the microorganisms or the like in the medium, as described above. Thus, styrene can be biosynthesized from the added phenylalanine and/or cinnamic acid by the microorganisms or the like.

Examples of the method of subjecting the intermediate, phenylalanine, to any of the above-mentioned chemical treatments such as catalytic reactions to prepare styrene include: a method in which the phenylalanine is reacted with an ammonia lyase, such as phenylalanine ammonia-lyase, and thereby converted to cinnamic acid, which is then decarboxylated using a decarboxylase, transition metal catalyst, zeolite or the like to prepare styrene; and a method in which the phenylalanine is directly subjected to high-temperature treatment with zeolite, alumina or the like to prepare styrene.

Examples of the method of subjecting the intermediate, cinnamic acid, to any of the above-mentioned chemical treatments such as catalytic reactions to prepare styrene include: a method in which the cinnamic acid is reacted with a metal catalyst containing a transition metal or the like, zeolite, alumina or the like at a high temperature for decarboxylation to prepare styrene.

Styrene can be obtained from biomass resources by the above-mentioned methods or other methods.

(((Polymerization method)))

The butadiene and styrene obtained from biomass resources by the above-mentioned methods or other methods may be polymerized into a styrene-butadiene rubber (biomass styrene-butadiene rubber (BSBR)) by methods similar to, but not limited to, those known to the skilled person for polymerizing petroleum resource-derived butadiene and styrene into a styrene-butadiene rubber.

Similarly, the butadiene obtained from biomass resources by the above-mentioned methods or other methods may be polymerized into a polybutadiene rubber (biomass polybutadiene rubber (BBR)) by methods similar to, but not limited to, those known to the skilled person for polymerizing petroleum resource-derived butadiene into a polybutadiene rubber.

Among the butadiene obtained from biomass resources, butadiene derived from alkyl alcohols (preferably ethanol or butanol, more preferably butanol), butadiene derived from alkenes (preferably ethylene), and butadiene derived from unsaturated carboxylic acids (preferably tiglic acid) are suitable. Moreover, combinations of these butadienes are also suitable.

Among the styrene obtained from biomass resources, styrene produced by plants (preferably plants of the families *Hamamelidaceae, Styracaceae,* and *Apocynaceae,* more preferably plants of the genera *Liquidambar, Styrax,* and *Catharanthus,* still more preferably *Liquidambar styraciflua, Styrax japonica,* and *Catharanthus roseus*) and styrene produced by microorganisms (preferably microorganisms of the genera *Penicillium* and *Escherichia,* more preferably *P. citrinum* and transformed *E. coli*) are suitable. Moreover, combinations of these styrenes are also suitable.

The molecular weight, branching, and microstructure of the prepared BBR or BSBR can be appropriately selected by varying the polymerization conditions in accordance with conventional methods, depending on the desired tire performance.

Currently, there are some plans to develop biomass industrial complexes mainly for bioethanol, bioethylene, and the like. However, bioethanol and bioethylene are produced mainly from saccharides and/or celluloses as biomass resources, and the effective use of other biomass resources, such as proteins, lipids, and amino acids, has not been achieved. In addition, the use of saccharides leads to competition with the demand as food and the overharvesting of celluloses leads to deforestation; therefore, a situation that is not necessarily environment-friendly may be caused.

Thus, the biomass-derived monomers are preferably used in the form of a combination of a plurality of biomass-derived monomers, or a combination of biomass-derived and petroleum resource-derived monomers, or a combination of these monomers in an optimally adjusted ratio, depending on the comprehensive environmental needs, including supply situation of various biomass resources, petroleum resource supply situation, and market needs (e.g., the trend of competition with the demand for biomass resources as food). This allows effective use of a wide variety of biomass resources such as saccharides, proteins, and lipids, without dependence on a single biomass resource, thus resulting in a stable supply of a biomass-derived rubber and attention to the environment according to the situation at the time of production. For example, biomass-derived butadiene can be prepared from the above-mentioned various substrates such as bioethanol, biobutanol, and terpenes. Also, biomass-derived styrene can be prepared using various plants or microorganisms.

When a plurality of biomass-derived monomers are used, the biomass-derived monomers are preferably monomers derived from different biomass species, in other words, monomers obtained from different biomass resources. Specifically, it is preferred to use a mixture of a plurality of biomass-derived butadienes of different origins as biomass-derived butadiene, and/or a mixture of a plurality of biomass-derived styrenes of different origins as biomass-derived styrene. This allows effective use of a plurality of biomass resources, thus more suitably meeting the above-mentioned comprehensive environmental needs.

Besides the above-mentioned artificial polymerization methods, BBR or BSBR may also be prepared from biomass resources by performing polymerization in vivo or using biological enzymes.

The amount of biomass-derived rubbers (preferably, BBR) based on 100% by mass of the rubber components is preferably 20% by mass or more, more preferably 40% by mass or more, still more preferably 60% by mass or more, particularly preferably 80% by mass or more, and may be 100% by mass. When the amount is within the range indicated above, the advantageous effect tends to be better achieved.

(Compounding ingredients other than rubber components)

The rubber composition preferably contains a resin.

Examples of the resin include cyclopentadiene resins, terpene resins, rosin resins, aromatic resins, C5 resins, C9 resins, C5/C9 resins, coumarone-indene resins (including resins based on coumarone or indene alone), olefin resins, polyurethane resins, and acrylic resins. These may be used alone or in combinations of two or more. Hydrogenated products of these resins (hydrogenated resins) may also be used. Moreover, the resin is preferably modified with a polar functional group interactive with silica. The polar functional group interactive with silica is as described for the above-mentioned functional group interactive with filler such as silica, and similar preferred embodiments may be used.

To more suitably achieve the advantageous effect, cyclopentadiene resins, terpene resins, rosin resins, aromatic resins, C5 resins, C9 resins, and C5/C9 resins are preferred among these.

Moreover, the resin is also preferably at least one selected from the group consisting of terpene resins and rosin resins. These resins are naturally-occurring resins and thus make it possible to further reduce environmental burdens and to improve tire properties such as grip performance on dry roads.

Moreover, the resin is also preferably at least one selected from the group consisting of cyclopentadiene resins, C5 resins, C5/C9 resins, and C9 resins. This makes it possible to improve overall performance in terms of abrasion resistance and fuel economy (expressed as the sum of two indices of abrasion resistance and fuel economy). Particularly for a high silica formulation, it is possible to further improve overall performance in terms of abrasion resistance and fuel economy.

Moreover, the resin is also preferably an aromatic resin. This makes it possible not only to more suitably achieve the advantageous effect but also to provide a balanced improvement of grip performance, abrasion resistance, and rubber strength.

The resin is most preferably a rosin resin.

The term "cyclopentadiene resin" refers to a polymer containing a cyclopentadiene monomer as a structural monomer. Examples include homopolymers polymerized from single cyclopentadiene monomers alone, copolymers copolymerized from two or more cyclopentadiene monomers, and copolymers of cyclopentadiene monomers and other monomers copolymerizable therewith. These may be used alone or in combinations of two or more.

Examples of the cyclopentadiene monomers include cyclopentadiene, dicyclopentadiene, and tricyclopentadiene. Each of these cyclopentadiene monomers may be used alone, or two or more of these may be used in combination. Dicyclopentadiene is preferred among these.

Among the cyclopentadiene resins, polymers containing dicyclopentadiene (DCPD) as a structural monomer (DCPD resins) are preferred because the advantageous effect tends to be better achieved. Copolymers of DCPD and aromatic monomers or copolymers of DCPD and C9 fractions (vinyltoluene, indene, etc.) (DCPD-C9 resins) may also be used.

Herein, polymers containing cyclopentadiene monomers and aromatic monomers as structural monomers, such as DCPD-C9 resins, are regarded as cyclopentadiene resins, rather than aromatic resins.

Examples of the terpene resins include polyterpene resins produced by polymerization of terpene compounds, and aromatic modified terpene resins produced by polymerization of terpene compounds and aromatic compounds. Hydrogenated products of these resins may also be used. These may be used alone or in combinations of two or more.

Polyterpene resins are resins produced by polymerization of terpene compounds. The term "terpene compounds" refers to hydrocarbons having a composition represented by $(C_5H_8)_n$ or oxygen-containing derivatives thereof, which have a terpene backbone and are classified into monoterpenes ($C_{10}H_{16}$), sesquiterpenes ($C_{15}H_{24}$), diterpenes ($C_{20}H_{32}$), etc. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. These may be used alone or in combinations of two or more.

Examples of the polyterpene resins include resins made from the above-mentioned terpene compounds, such as pinene resins, limonene resins, dipentene resins, and pinene-limonene resins. These may be used alone or in combinations of two or more. Pinene resins are preferred among these. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from terpene compounds and phenolic compounds, and terpene-styrene resins made from terpene compounds and styrene compounds. Terpene-phenol-styrene resins made from terpene compounds, phenolic compounds, and styrene compounds may also be used. These may be used alone or in combinations of two or more. Herein, polymers containing terpene compounds and phenolic compounds as structural monomers, such as aromatic modified terpene resins, are regarded as terpene resins, rather than aromatic resins.

Among the terpene resins, polyterpene resins are preferred, with β-pinene resins being more preferred, because the advantageous effect tends to be better achieved.

Examples of the rosin resins include natural rosin resins (polymerized rosins) such as gum rosin, wood rosin, and tall oil rosin which mainly contain resin acids such as abietic acid or pimaric acid produced by processing pine resin; hydrogenated rosin resins, maleic acid-modified rosin resins, rosin-modified phenol resins, rosin glycerol esters, and disproportionated rosin resins. These may be used alone or in combinations of two or more.

The term "aromatic resin" refers to a polymer containing an aromatic monomer as a structural monomer. Examples include homopolymers polymerized from single aromatic monomers alone, copolymers copolymerized from two or more aromatic monomers, and copolymers of aromatic monomers and other monomers copolymerizable therewith. These may be used alone or in combinations of two or more.

Examples of the aromatic monomers include styrenic monomers such as styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene; phenolic monomers such as phenol, alkylphenols, and alkoxy phenols; and naphtholic monomers such as naphthol, alkyl naphthols, and alkoxy naphthols. Each of these aromatic monomers may be used alone, or two or more of these may be used in combination. Styrenic monomers are preferred among these, with styrene or α-methylstyrene being more preferred.

Among the aromatic resins, polymers containing α-methylstyrene as a structural monomer (α-methylstyrene resins) are preferred, with copolymers of α-methylstyrene and styrene being more preferred, because the advantageous effect tends to be better achieved.

The term "C5 resin" refers to a polymer containing a C5 hydrocarbon and a multimer (e.g., dimer) thereof as structural units. Examples of the C5 hydrocarbon and multimer thereof include isoprene, pentane, and cyclopentadiene. Specific examples of the C5 resins include copolymers of isoprene and pentane. Other examples of the C5 resins include aliphatic petroleum resins produced by (co)polymerization of C5 fractions obtained by thermal cracking of naphtha in the petrochemical industry. Examples of the C5 fractions include olefinic hydrocarbons such as 1-pentene, 2-pentene, and 2-methyl-1-butene, and diolefinic hydrocarbons such as 2-methyl-1,3-butadiene, 1,2-pentadiene, and 1,3-pentadiene. These may be used alone or in combinations of two or more.

Herein, polymers containing cyclopentadiene as a structural monomer are regarded as cyclopentadiene resins.

The term "C9 resin" refers to a polymer containing a C9 hydrocarbon and a multimer (e.g., dimer) thereof as structural units. Examples of the C9 hydrocarbon and multimer (e.g., dimer) thereof include indene, methylstyrene, and vinyltoluene. Specific examples of the C9 resins include solid polymers produced by (co)polymerization of C9 fractions using Friedel-Crafts catalysts or the like, such as copolymers containing indene as a major component, copolymers containing methylindene as a major component, copolymers containing α-methylstyrene as a major component, and copolymers containing vinyltoluene as a major component. These may be used alone or in combinations of two or more.

Herein, polymers containing methylstyrene as a structural monomer are regarded as aromatic resins.

Examples of the C5/C9 resins include mixtures of the above-described C5 resins and the above-described C9 resins and copolymers of C5 and C9 fractions. These may be used alone or in combinations of two or more.

Aliphatic C5 resins and alicyclic C9 resins are preferred.

The softening point of the resin is preferably 30°C or higher, more preferably 60°C or higher, still more preferably 80°C or higher, but is preferably 160°C or lower, more preferably 140°C or lower. When the softening point is within the range indicated above, the advantageous effect tends to be better achieved.

Herein, the softening point of polymers (e.g., resins, polymers) is determined in accordance with JIS K6220-1:2001 using a ring and ball softening point measuring apparatus and defined as the temperature at which the ball drops down.

The resin may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., Exxon Mobil Corporation, etc.

The amount of resins per 100 parts by mass of the rubber components is 10 to 100 parts by mass. The amount is preferably 20 parts by mass or more, more preferably 30 parts by mass or more, still more preferably 40 parts by mass or more, particularly preferably 50 parts by mass or more, most preferably 60 parts by mass or more, but is preferably 90 parts by mass or less, more preferably 85 parts by mass or less, still more preferably 80 parts by mass or less. When the amount is within the range indicated above, the advantageous effect tends to be better achieved.

The rubber composition preferably contains silica.

Examples of the silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more.

The silica is preferably rice husk-derived silica (also referred to as rice husk silica).

The first effect of the use of rice husk silica is to effectively use rice husks as industrial waste, which is preferred from the aspect of environmental friendliness. The second effect is to allow for local procurement of raw materials.

Recycling of rice husks, which are waste from rice produced in large quantities as staple food around the world, is an important issue. The incorporation of them as rice husk silica provides a reduction in waste and another advantage in that since they are produced in many places, the energy required for transportation and storage can be reduced by procurement near the tire production plant.

The third effect is that the incorporation of rice husk silica improves tire physical properties such as wet grip performance, as compared to the incorporation of usual wet silica industrially produced in the conventional art. The reason for this is not clear, but may be because, for example, the components such as carbon black which may be present in a trace amount in rice husk-derived silica contribute to enhancing the affinity with other components, or change the viscoelasticity of the regions related to wet grip performance, as compared to a single silica component.

The rice husk silica may be a rice husk charcoal powder obtained by heating rice husks to be carbonized. Alternatively, it may be a precipitated silica produced by a wet process using an aqueous alkali silicate solution prepared by extracting, with an alkali, rice husk ash generated during combustion of rice husks as fuel in a biomass boiler. These may be used alone or in combinations of two or more.

Rice husk charcoal may be produced by any of various known methods. For example, rice husk charcoal may be produced by steam-heating rice husks in a furnace to be thermally decomposed. The rice husk charcoal powder to be used may be prepared by grinding the thus obtained rice husk charcoal using a known grinder (for example, ball mill), followed by screening and classification into a predetermined particle size range.

The precipitated silica may be produced from rice husks as described in for example JP 2019-38728 A, which is hereby incorporated by reference in its entirety.

In particular, the rice husk silica is preferably produced in areas near the tire production plant.

The nitrogen adsorption specific surface area ($N_2SA$) of the silica is preferably 50 $m^2/g$ or more, more preferably 100 $m^2/g$ or more, still more preferably 150 $m^2/g$ or more. The upper limit of the $N_2SA$ of the silica is not limited, but is preferably 350 $m^2/g$ or less, more preferably 250 $m^2/g$ or less, still more preferably 230 $m^2/g$ or less, particularly preferably 200 $m^2/g$ or less. When the $N_2SA$ is within the range indicated above, the advantageous effect tends to be better achieved.

The $N_2SA$ of the silica is measured by a BET method in accordance with ASTM D3037-93.

The amount of silica per 100 parts by mass of the rubber components is preferably 5 parts by mass or more, more preferably 10 parts by mass or more, still more preferably 30 parts by mass or more, particularly preferably 50 parts by mass or more, most preferably 70 parts by mass or more, further most preferably 80 parts by mass or more, still further most preferably 100 parts by mass or more, particularly most preferably 110 parts by mass or more. The upper limit of the amount is preferably 300 parts by mass or less, more preferably 200 parts by mass or less, still more preferably 180 parts by mass or less, particularly preferably 150 parts by mass or less. When the amount is within the range indicated above, the advantageous effect tends to be better achieved.

In the rubber composition, the ratio of the amount of resins to the amount of silica is preferably 0.1 or higher, more preferably 0.2 or higher, still more preferably 0.3 or higher, particularly preferably 0.4 or higher, most preferably 0.5 or higher, but is preferably 1.5 or lower, more preferably 1.2 or lower, still more preferably 0.9 or lower, particularly preferably 0.8 or lower, most preferably 0.7 or lower. When the ratio is within the range indicated above, the advantageous effect tends to be better achieved.

The amount of resins and the amount of silica in the above relationship are each the amount (unit: parts by mass) per 100 parts by mass of the rubber components.

The silica is preferably used together with a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from, for example, Degussa, Momentive, Shin-Etsu Silicone, Tokyo Chemical Industry Co., Ltd., AZmax. Co., Dow Corning Toray Co., Ltd., etc. These may be used alone or in combinations of two or more. Sulfide silane coupling agents are preferred among these.

The amount of silane coupling agents per 100 parts by mass of the silica is preferably 3 parts by mass or more, more preferably 6 parts by mass or more, still more preferably 8 parts by mass or more, but is preferably 15 parts by mass or less, more preferably 12 parts by mass or less, still more preferably 10 parts by mass or less. When the amount is within the range indicated above, the advantageous effect tends to be better achieved.

The rubber composition preferably contains carbon black.

Non-limiting examples of the carbon black include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The nitrogen adsorption specific surface area ($N_2SA$) of the carbon black is preferably 50 $m^2/g$ or more, more preferably 70 $m^2/g$ or more, still more preferably 90 $m^2/g$ or more. The $N_2SA$ is also preferably 200 $m^2/g$ or less, more preferably 150 $m^2/g$ or less, still more preferably 130 $m^2/g$ or less. When the $N_2SA$ is within the range indicated above, the advantageous effect tends to be better achieved.

The nitrogen adsorption specific surface area of the carbon black is determined in accordance with JIS K6217-2 : 2001.

The amount of carbon black per 100 parts by mass of the rubber components is preferably 1 part by mass or more, more preferably 3 parts by mass or more, still more preferably 5 parts by mass or more, but is preferably 30 parts by mass or less, more preferably 20 parts by mass or less, still more preferably 10 parts by mass or less. When the amount is within the range indicated above, the advantageous effect tends to be better achieved.

The percentage of silica based on 100% by mass of the combined amount of silica and carbon black is preferably 60% by mass or more, more preferably 70% by mass or more, still more preferably 80% by mass or more, particularly preferably 90% by mass or more, most preferably 95% by mass or more. The upper limit may be 100% by mass, but is preferably 98% by mass or less. When the percentage is within the range indicated above, the advantageous effect tends to be better achieved.

The rubber composition preferably contains a rubber powder. The rubber powder may be a single rubber powder or a combination of two or more rubber powders.

The rubber powder preferably contains 10 parts by mass or more of carbon black and 13 to 20 parts by mass of silica per 100 parts by mass of the rubber components. The carbon black and silica are as described for the rubber composition, and similar preferred embodiments may be used.

In the rubber powder, the amount of carbon black per 100 parts by mass of the rubber components is preferably 15 parts by mass or more, more preferably 20 parts by mass or more, still more preferably 30 parts by mass or more, particularly preferably 40 parts by mass or more. The upper limit is not limited, but is preferably 80 parts by mass or less, more preferably 60 parts by mass or less, still more preferably 50 parts by mass or less. When the amount is within the range indicated above, the advantageous effect tends to be better achieved.

In the rubber powder, the amount of silica per 100 parts by mass of the rubber components is preferably 18 parts by mass or less, but is preferably 15 parts by mass or more. When the amount is within the range indicated above, the advantageous effect tends to be better achieved.

Other compounding ingredients that may be used in the rubber powder are as described for the rubber composition, and similar preferred embodiments may be used.

In the rubber powder, the isoprene-derived unit content based on 100% by mass of the total units of the rubber components is preferably 40% by mass or more, more preferably 50% by mass or more, still more preferably 60% by mass or more. The upper limit is not limited, but is preferably 95% by mass or less, more preferably 90% by mass or less, still more preferably 80% by mass or less, particularly preferably 70% by mass or less. When the content is within the range indicated above, the advantageous effect tends to be better achieved.

In this case, the butadiene-derived unit content based on 100% by mass of the total units of the rubber components in the rubber powder is preferably 5% by mass or more, more preferably 10% by mass or more, still more preferably 20% by mass or more, particularly preferably 30% by mass or more, but is preferably 60% by mass or less, more preferably 50% by mass or less, still more preferably 40% by mass or less. When the content is within the range indicated above, the advantageous effect tends to be better achieved.

The rubber powder preferably contains, based on 100% by mass of the rubber components, 1 to 40% by mass of at least one polybutadiene rubber having a cis content of 90% by mass or higher (high-cis BR). The lower limit of the amount is preferably 5% by mass or more, more preferably 10% by mass or more, still more preferably 15% by mass or more, particularly preferably 20% by mass or more. The upper limit is preferably 35% by mass or less, more preferably 30% by mass or less. When the amount is within the range indicated above, the advantageous effect tends to be better achieved.

The rubber powder may be prepared, for example, by mixing and vulcanizing a rubber composition containing the above-mentioned components as described above or by another method, and grinding the vulcanized rubber composition as needed.

The rubber powder preferably has a volume average particle size of 1000 um or less. The volume average particle size is preferably 500 um or less, more preferably 200 um or less, still more preferably 100 um or less. A smaller volume average particle size is preferred and thus the lower limit is not limited. When the volume average particle size is within the range indicated above, the advantageous effect tends to be better achieved.

Herein, the volume average particle size can be measured using a laser diffraction particle size distribution analyzer, for example, "CAPA500" available from Horiba, Ltd.

The 60-mesh sieve residue content of the rubber powder is preferably lower than 1% by mass, more preferably 0.5% by mass or lower, still more preferably 0.1% by mass or lower. The lower limit is not limited. When the 60-mesh sieve residue content is within the range indicated above, the advantageous effect tends to be better achieved.

Moreover, the 80-mesh sieve residue content of the rubber powder is preferably lower than 10% by mass, more preferably 1% by mass or lower, still more preferably 0.5% by mass or lower. The lower limit is not limited. When the 80-mesh sieve residue content is within the range indicated above, the advantageous effect tends to be better achieved.

Herein, the sieve residue contents are measured in accordance with ASTM D5644-01.

The acetone extractable content of the rubber powder determined by an acetone extraction method is preferably 12% by mass or lower, more preferably 11% by mass or lower, still more preferably 10% by mass or lower, but is preferably 1% by mass or higher, more preferably 2% by mass or higher, still more preferably 3% by mass or higher.

When the acetone extractable content is within the range indicated above, the advantageous effect tends to be better achieved.

Herein, the acetone extractable content of the rubber powder refers to the acetone extractable content (%) determined by an acetone extraction method in accordance with JIS K6350.

The amount of the rubber powder per 100 parts by mass of the rubber components in the rubber composition is preferably 1 part by mass or more, more preferably 2 parts by mass or more, still more preferably 3 parts by mass or more, but is preferably 200 parts by mass or less, more preferably 150 parts by mass or less, still more preferably 100 parts by mass or less, particularly preferably 50 parts by mass or less, most preferably 30 parts by mass or less, still most preferably 15 parts by mass or less, further most preferably 10 parts by mass or less, particularly most preferably 5 parts by mass or less. When the amount is within the range indicated above, the advantageous effect tends to be better achieved.

The rubber composition may contain a liquid plasticizer (a plasticizer that is liquid at room temperature (25°C)).

Non-limiting examples of the liquid plasticizer (plasticizer that is liquid at room temperature (25°C)) include oils and liquid polymers (e.g., liquid diene polymers). These may be used alone or in combinations of two or more. Oils are preferred among these.

Examples of the oils include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin OilliO Group, Ltd., etc. These may be used alone or in combinations of two or more. Process oils (e.g., paraffinic process oils, aromatic process oils, naphthenic process oils) and vegetable oils are preferred among these, with aromatic process oils being more preferred.

Examples of the liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers may also be used. These may be used alone or in combinations of two or more.

The amount of liquid plasticizers (preferably, oils) per 100 parts by mass of the rubber components is preferably 5 parts by mass or more, more preferably 10 parts by mass or more. The upper limit of the amount is preferably 100 parts by mass or less, more preferably 70 parts by mass or less, still more preferably 50 parts by mass or less, particularly preferably 30 parts by mass or less. When the amount is within the range indicated above, the advantageous effect tends to be better achieved.

The amount of liquid plasticizers (preferably, oils) includes the amount of the oils contained in the oil extended rubbers, if used.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these antioxidants may be used alone, or two or more of these may be used in combination. Preferred among these are p-phenylenediamine antioxidants and quinoline antioxidants, with combinations of p-phenylenediamine and quinoline antioxidants being more preferred.

The amount of antioxidants per 100 parts by mass of the rubber components is preferably 1 part by mass or more, more preferably 1.5 parts by mass or more, still more preferably 2 parts by mass or more, but is preferably 12 parts by mass or less, more preferably 10 parts by mass or less, still more preferably 8 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these waxes may be used alone, or two or more of these may be used in combination.

The amount of waxes per 100 parts by mass of the rubber components is preferably 0.5 parts by mass or more, more preferably 1 part by mass or more, but is preferably 10 parts by mass or less, more preferably 6 parts by mass or less. When the amount is within the range indicated above, the advantageous effect tends to be better achieved.

The rubber composition may contain stearic acid.

The stearic acid may be a conventional one. Usable commercial products are available from NOF Corporation, Kao Corporation, FUJIFILM Wako Pure Chemical Corporation, Chiba Fatty Acid Co., Ltd., etc. Each of these types of stearic acid may be used alone, or two or more of these may be used in combination.

The amount of stearic acid per 100 parts by mass of the rubber components is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain zinc oxide.

The zinc oxide may be a conventional one. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these types of zinc oxide may be used alone, or two or more of these may be used in combination.

The amount of zinc oxide per 100 parts by mass of the rubber components is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition preferably contains sulfur.

Examples of the sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber components is preferably 0.3 parts by mass or more, more preferably 0.5 parts by mass or more, still more preferably 0.8 parts by mass or more, but is preferably 8 parts by mass or less, more preferably 5 parts by mass or less. When the amount is within the range indicated above, the advantageous effect tends to be better achieved.

The rubber composition preferably contains a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more. Sulfenamide vulcanization accelerators and guanidine vulcanization accelerators are preferred among these, with combinations of sulfenamide and guanidine vulcanization accelerators being more preferred.

The amount of vulcanization accelerators per 100 parts by mass of the rubber components is preferably 1 part by mass or more, more preferably 2 parts by mass or more, still more preferably 3 parts by mass or more, but is preferably 8 parts by mass or less, more preferably 6 parts by mass or less, still more preferably 5.5 parts by mass or less. When the amount is within the range indicated above, the advantageous effect tends to be better achieved.

In addition to the above-mentioned components, the rubber composition may contain additives commonly used in the tire industry, examples of which include organic peroxides; and fillers such as calcium carbonate, talc, alumina, clay, aluminum hydroxide, and mica. The amounts of these additives are each preferably 0.1 to 200 parts by mass per 100 parts by mass of the rubber components.

The rubber composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

The (vulcanized) rubber composition preferably has a tan $\delta$ at 0°C of 0.18 to 1.60. When the tan $\delta$ is within the range indicated above, the advantageous effect tends to be better achieved.

Herein, the tan $\delta$ at 0°C of the (vulcanized) rubber composition refers to the loss tangent measured at a temperature of 0°C, an initial strain of 10%, a dynamic strain of 2%, and a frequency of 10 Hz.

The (vulcanized) rubber composition preferably has a glass transition temperature (Tg) of -85°C to -5°C. When the Tg is within the range indicated above, the advantageous effect tends to be better achieved.

Herein, the Tg of the (vulcanized) rubber composition can be measured as described in EXAMPLES. When multiple Tg values are observed, the preferred Tg range indicated above corresponds to the higher Tg value.

The rubber composition can be used in tire components (i.e., as a tire rubber composition), including for example treads (cap treads), sidewalls, base treads, undertreads, shoulders, clinches, bead apexes, breaker cushion rubbers, rubbers for carcass cord topping, insulations, chafers, and innerliners, as well as side reinforcement layers of run-flat tires. The rubber composition is especially suitable for use in treads. In the case of a tread consisting of a cap tread and a base tread, the rubber composition may be suitably used in the cap tread.

The tire (e.g., pneumatic tire) according to the present invention can be produced from the above-described rubber composition by usual methods. Specifically, the unvulcanized rubber composition containing additives as needed may be extruded into the shape of a tire component (in particular, a tread (cap tread)) and then formed and assembled with other tire components in a usual manner on a tire building machine to build an unvulcanized tire, which may then be heated and pressurized in a vulcanizer to produce a tire.

It is sufficient that the tire component (e.g., tread) of the tire at least partially include the rubber composition. The entire tire component may include the rubber composition.

The tire is a passenger car tire.

Herein, the term "passenger car tire" refers to a tire which is supposed to be mounted on a vehicle that runs on four wheels and which has a maximum load capacity (specified in JATMA, ETRTO, or other standard) of 1000 kg or less. The maximum load capacity is preferably 900 kg or less, more preferably 800 kg or less, still more preferably 700 kg or less. The lower limit is not limited.

The tire can be suitably used as a winter tire (studless winter tire, snow tire, cold weather tire, studded tire), an all-season tire, a summer tire, or a run-flat tire, for example.

## EXAMPLES

The present invention will be specifically described with reference to, but not limited to, examples.

The butadienes, styrenes, polybutadiene rubbers, and styrene-butadiene rubber prepared in the production examples described later were evaluated as described below.

(pMC of butadiene, styrene, polybutadiene rubber, and styrene-butadiene rubber)

The pMC of the butadiene, styrene, styrene-butadiene rubber, and other materials was measured by the following method in accordance with ASTM D6866-10.

A sample (butadiene, styrene, polybutadiene rubber, or styrene-butadiene rubber) was burnt to generate carbon dioxide ($CO_2$), which was then purified through a vacuum line. Next, the purified carbon dioxide was reduced with hydrogen in the presence of an iron catalyst to form graphite (C). Then, the graphite was charged into a cathode (inner diameter: 1 mm) using a hand press. This cathode was mounted on a wheel and set on a measurement system (a tandem accelerator-based system dedicated to $^{14}C$-AMS, NEC Corp.). The measurement system was used to measure the $^{14}C$ and $^{13}C$ contents, and oxalic acid offered by the National Institute of Standards and Technology (NIST), United States was used as a standard sample to calculate the pMC (%) indicative of the biomass ratio. In the pMC calculation, the values were corrected with the $^{13}C$ content values.

(Cis content of polybutadiene rubber)

The cis content was measured using NMR instrument AV400 and data analysis software TOP SPIN2.1 both available from BRUKER.

(Styrene content of styrene-butadiene rubber)

The styrene content was measured using NMR instrument AV400 and data analysis software TOP SPIN2.1 both available from BRUKER.

(Weight average molecular weight (Mw) and molecular weight distribution (Mw/Mn) of rubber)

The weight average molecular weight (Mw) and number average molecular weight (Mn) were measured by gel permeation chromatography (GPC) under the following conditions (1) to (8). Then, the molecular weight distribution (Mw/Mn) of the polymer was determined from the measured Mw and Mn.

(1) Instrument: HLC-8020 available from TOSOH CORPORATION
(2) Separation column: GMH-XL (2 columns in series) available from TOSOH CORPORATION
(3) Measurement temperature: 40°C
(4) Carrier: tetrahydrofuran
(5) Flow rate: 0.6 mL/min
(6) Injection volume: 5 μL
(7) Detector: differential refractometer
(8) Molecular weight standards: polystyrene standards

Production Example 1 (Production of butadiene from butanol)

<Production of biobutanol>

A 300 ml fermenter (DASGIP) was filled with 250 ml of a synthetic medium (containing saccharides) of Soni et al. (Soni et al., Appl. Microbiol. Biotechnol., 1987, vol.27, pp. 1-5), and then sparged with nitrogen for 30 minutes. Then, *Clostridium acetobutylicum* (ATCC 824) was anaerobically inoculated in the medium. The culture temperature was maintained at constant 35°C, and the pH was adjusted to 5.5 using a $NH_4OH$ solution. During the culture, the anaerobic conditions were maintained and the shaking speed was maintained at 300 rpm. After five-day culture, the culture fluid was distilled and then separated by a conventionally well-known ion exchange resin technique to obtain biobutanol (1-butanol).

<Production of butadiene from biobutanol>

Using a system shown in Fig. 1, biomass-derived butadiene was synthesized from the biobutanol (1-butanol) prepared in <Production of biobutanol> as a raw material.

The system used here (see Fig. 1) was provided with an alcohol feed pipe (raw material feed pipe) 21, a heater (electric furnace) 22 for vaporizing the fed alcohol, a dehydration column 23 for effecting dehydration of the alcohol, a cooler 24 for cooling the product of the dehydration reaction and removing water from the purified alkene mixture, a heater 25 for vaporizing the alkene, a second reaction column 26 for further effecting dehydrogenation of the alkene to synthesize butadiene, and a cooler 27 for collecting the generated reaction product. The dehydration column 23 was packed with 10 g of aluminum oxide (101095100, Merck) as catalyst.

A catalyst for the second dehydrogenation reaction was prepared as follows. Chromium nitrate (5.8 g) was dissolved in ion-exchange water. Then, SSZ-35 zeolite (6 g, silica/alumina ratio: 40) was put into and impregnated with the solution and left to stand overnight. Subsequently, the workpiece was dried in a 100°C oven to give a precursor. This precursor was put in a ceramic container and then fired for three hours at 700°C in the air to obtain a chromium-supported zeolite catalyst containing 10% by mass of chromium.

Then, the second reaction column 26 was packed with 10 g of the chromium-supported zeolite catalyst.

Nitrogen gas was supplied to the dehydration column 23 through a gas feed pipe (not shown). The nitrogen gas was supplied at a LHSV rate of 1/hr. After the dehydration column 23 was heated to a predetermined temperature with the heater 22, a predetermined amount of the biobutanol was supplied through the alcohol feed pipe 21. The reaction conditions were as follows: reaction temperature was 500°C, reaction pressure was atmospheric pressure, and molar ratio of biobutanol to nitrogen was 50/50 (biobutanol/nitrogen). The reaction time was two hours. The resulting product was collected in the cooler (product trap) 24 connected to the dehydration column 23, and water was then separated away.

The second reaction column 26 was heated to 500°C. The cooler (product trap) 27 was cooled down to -20°C. A pre-heated gas mixture ((the butene mixture obtained in the first dehydration reaction)/nitrogen/air = 1:1:1) was fed at a LHSV rate of 1/hr through the cooler (product trap) 24. The resulting reaction mixture was separated and purified as described in JP S60-115532 A (which is hereby incorporated by reference in its entirety) to give biomass-derived butadiene at a yield of 8%. The pMC indicative of the biomass ratio of the butadiene (biomass-derived butadiene) was 105%.

Production Example 2 (Production of butadiene from bioethanol)

Using the system shown in Fig. 1, biomass-derived butadiene was synthesized from commercially available bioethanol by a known method of converting ethanol to butadiene (Kirshenbaum, I., "Butadiene", Encyclopedia of Chemical Technology, 3rd ed., vol. 4, Grayson, M., (ed.), John Wiley & Sons, New York, 1978, pp. 313-337). The pMC indicative of the biomass ratio of the butadiene (biomass-derived butadiene) was 108%.

Production Example 3 (Production of butadiene from bioethylene)

A catalyst prepared by dissolving 0.5 mmol/L palladium acetate in 0.3 mol/L $Na_3H_3PMo_9V_3O_{40}$ was introduced into the second reaction column 26 of the system shown in Fig. 1, and the system was purged with argon. Then, biomass-derived ethylene (trial product formed from corn-derived bioethanol) was fed into the system. A reaction was allowed to proceed for one hour while the catalyst solution was circulated in the system through a circulation line 28 at 150°C and 0.5 MpaG. After the catalyst solution was removed through a drain of the cooler 27, an alumina catalyst (alumina KHA-46 available from Sumitomo Chemical Co., Ltd.) immersed in bioethanol was introduced and a reaction was allowed to proceed at 400°C for five hours. The reaction mixture was analyzed by GC/MS to confirm the formation of butadiene. The pMC indicative of the biomass ratio of the butadiene (biomass-derived butadiene) was 109%.

Production Example 4 (Production of butadiene from tiglic acid)

An argon-filled autoclave was charged with 500 mg of tiglic acid (an intermediate of an amino acid-mediated in-vivo reaction) separated and purified from croton oil, 30 mg of tetrakis(triphenylphosphine)palladium(0), and 10 mg of triethylboron, and they were reacted at 200°C for one hour. The resulting product was analyzed by GC/MS to confirm the formation of butadiene. The pMC indicative of the biomass ratio of the butadiene (biomass-derived butadiene) was 108%.

The biomass-derived butadienes prepared in Production Examples 1 to 4 were analyzed using NMR instrument AV400 (with data analysis software TOP SPIN2.1) available from BRUKER and confirmed to be 1,3-butadiene.

Production Example 5 (Production of styrene from trees of the family *Hamamelidaceae*)

A part of the bark was peeled off trees of *Liquidambar styraciflua*, and a resin exuded therefrom (620 g in total) was immersed in toluene and left to stand for half a day. Then, the toluene solution was filtered and distilled to obtain 2.4 g of a 130 to 160°C fraction. The fraction was purified by HPLC separation to obtain 0.8 g of styrene. The pMC indicative of the biomass ratio of the styrene (biomass-derived styrene) was 109%.

Separately, 1 kg of the peeled bark was treated in the same manner as above to obtain 0.8 g of styrene. The pMC indicative of the biomass ratio of the styrene (biomass-derived styrene) was 109%.

Production Example 6 (Production of styrene from trees of the family *Styracaceae*)

A resin (610 g) of trees of *Styrax japonica* was treated in the same manner as in Production Example 5 to obtain 0.1 g of styrene. The pMC indicative of the biomass ratio of the styrene (biomass-derived styrene) was 109%.

Production Example 7 (Production of styrene by plant tissue culture)

The bud was cut from *Catharanthus roseus* and immersed in a 70% ethanol solution and then in an approximately 0.5% sodium hypochlorite solution, followed by washing with sterile water. The washed tissue section (bud) was placed on an MS medium supplemented with 1.0 mg/l dichlorophenoxyacetic acid and 1.0 mg/l benzyl adenine, and then cultured at 25°C for five weeks to form a callus.

Next, 10 g of the callus was transplanted in 20 ml of a Gamborg B5 liquid medium (Gamborg O.L., Miller R. A., Ojima K., Experimental Cell Research, 50, pp. 151-158 (1968).) supplemented with 50 mg biomass-derived cinnamic acid, 1.0 mg/l dichlorophenoxyacetic acid, 1.0 mg/l benzyl adenine, and 3% sucrose, and then cultured for 12 days at a culture temperature of 25°C in a dark environment while shaking at a rotation rate of 100 rpm.

The tissue culture was taken out, washed with water, dried, and freeze ground. The freeze ground product was extracted with hexane, and the extract was purified by HPLC separation to obtain 6 mg of styrene. The pMC indicative of the biomass ratio of the styrene (biomass-derived styrene) was 109%.

Here, the biomass-derived cinnamic acid was prepared by further purifying cinnamic acid derived from herbs (Scrophulariaceae Juss.) sold for aromatherapy use by high-performance liquid chromatography.

Production Example 8 (Production of styrene using non-genetically modified microorganism)

Potato dextrose medium powder (Sigma-Aldrich) (24 g) was dissolved in 1000 mL of purified water, followed by sterilization in an autoclave at 121°C for 20 minutes. Chloramphenicol was added to a final concentration of 100 mg/L before use.

*Penicillium citrinum* (ATCC 9849) was inoculated in the medium and statically cultured under sealed conditions at 25°C for two weeks. Then, hexane was added to the culture vessel and shaken. Subsequently, the hexane layer was separated and analyzed by GC/MS to confirm the formation of styrene. The pMC indicative of the biomass ratio of the styrene (biomass-derived styrene) was 109%.

Production Example 9 (Production of styrene using genetically modified *Escherichia coli*)

<Preparation of encP gene (phenylalanine ammonia-lyase encoding gene) fragment and construction of encP expression plasmid>

An actinomycete (*Streptomyces maritimus*) encP gene (1572 bp from the initiation codon to the stop codon, GenBank accession number: AF254925, nucleotide number: 16269 to 17840) was prepared as artificial gene, and a DNA in which the gene was inserted into a SmaI site in the cloning vector pUC19 plasmid was used as template for PCR. PCR was performed using an upstream primer (SEQ ID No: 1) containing a NdeI site at the 5' end and a downstream primer (SEQ ID No: 2) containing a BamHI site at the 5' end. The reaction solution was purified using QIAprep PCR Purification Kit (QIAGEN) to obtain a DNA fragment E (NdeI-encP-BamHI: 1592 bp) consisting of the encP gene containing new restriction enzyme sites at both ends.

According to general recombinant DNA techniques, the DNA fragment E treated with a NdeI restriction enzyme and a BamHI restriction enzyme was ligated into the NdeI/BamHI site of a pET11a vector (Novagen), and transfected into *Escherichia coli* DH-5α competent cells. The cells were inoculated in an LB agar medium containing 50 ug/mL ampicillin, followed by culture overnight at 37°C. The *Escherichia coli* colonies formed in the agar medium were cultured in an LB liquid medium (5 mL) containing 50 ug/mL ampicillin with shaking at 37°C for one night. The plasmid was extracted from the obtained *Escherichia coli* cells using QIAprep Spin Miniprep Kit (QIAGEN). DNA sequence analysis of the plasmid confirmed that the DNA sequence of GenBank accession number AF254925 was inserted into the target site of the pET11a vector. This plasmid was taken as encP expression plasmid pET11-encP (plasmid illustrated in Fig. 2(a)).

<Isolation of FDC1 gene (ferulic acid decarboxylase encoding gene)>

Genomic DNA was purified from the budding yeast *Saccharomyces cerevisiae* using Yeast Geno-DNA-Template (Geno Technology, Inc.) and used as template for the first PCR. The PCR was performed using an upstream primer (SEQ ID No: 3) and a downstream primer (SEQ ID No: 4), and the reaction solution was purified using QIAprep PCR purification Kit (QIAGEN). The resulting DNA was used as template for the second PCR. The second PCR was performed using an upstream primer (SEQ ID No: 5) containing a BspHI site at the 5' end and a downstream primer (SEQ ID No: 6) containing a HindIII site at the 5' end, and the reaction solution was purified using QIAprep PCR purification Kit (QIAGEN) to obtain a DNA fragment F (BspHI-FDC1-HindIII: 1525 bp) consisting of the FDC1 gene with new restriction enzyme sites added to both ends.

<Isolation of PAD1 gene (cinnamate decarboxylase (phenylacrylate decarboxylase) encoding gene)>

PCR was performed using the above-described *Saccharomyces cerevisiae* genome as template with an upstream primer (SEQ ID No: 7) and a downstream primer (SEQ ID No: 8). The reaction solution was purified using PCR purification Kit (QIAGEN), and the resulting DNA was used as template for the second PCR. The second PCR was performed using an upstream primer (SEQ ID No: 9) containing a NdeI site at the 5' end and a downstream primer (SEQ ID No: 10) containing a XhoI site at the 5' end, and the reaction solution was purified using QIAprep PCR purification Kit (QIAGEN) to obtain a DNA fragment P (NdeI-PAD1-XhoI: 746 bp) consisting of the PAD1 gene with new restriction enzyme sites added to both ends.

<Construction of FDC1/PAD1 coexpression plasmid>

The FDC1 gene DNA fragment F and the PAD1 gene DNA fragment P were inserted into the multiple cloning site-1 (MCS-1) and the multiple cloning site-2 (MCS-2) of pRSFDuet-1 (Novagen), respectively, as described below.

According to general recombinant DNA techniques, the DNA fragment F treated with a BspHI restriction enzyme and a HindIII restriction enzyme was inserted between the NcoI site and the HindIII site in the multiple cloning site-1 of the pRSFDuet-1 vector (Novagen). pRSF-FDC1 was constructed in the same manner as described for the construction of pET11-encP, except that kanamycin was used instead of ampicillin in the agar medium and the liquid medium.

Similarly, the DNA fragment P treated with a NdeI restriction enzyme and a XhoI restriction enzyme was incorporated between the NdeI site and the XhoI site (derived from MCS-2 of the original vector pRSFDuet-1) of pRSF-FDC1 to construct a plasmid which was taken as pRSF-FDC1-PAD1 (plasmid illustrated in Fig. 2(b)).

<Preparation of transformant>

pET11-encP and pRSF-FDC1-PAD1 were simultaneously transfected into *Escherichia coli* BL21 (DE3) competent cells, and the cells were inoculated in an LB agar medium containing 35 ug/mL ampicillin and 20 ug/mL kanamycin, and then cultured overnight at 30°C. The formation of *Escherichia coli* colonies in the agar medium was observed.

<Production of styrene by transformant>

The *Escherichia coli* colonies transfected with pET11-encP and pRSF-FDC1-PAD1 were inoculated in 1 mL of an LB liquid medium containing 35 ug/mL ampicillin and 20 ug/mL kanamycin, and then cultured with shaking overnight at 30°C to prepare a preculture fluid. The preculture fluid (100 uL) was inoculated in 50 mL of an LB liquid medium containing 35 ug/mL ampicillin and 20 ug/mL kanamycin in a 300 mL erlenmeyer flask, and then cultured with shaking at 30°C for 15 hours. The culture was further continued under the same conditions while the absorbance (A600) of the culture fluid was measured at a wavelength of 600 nm every 30 minutes. Once the A600 reached 0.8, 1 M isopropyl-β-thiogalactopyranoside (IPTG) (25 μL, final concentration 0.5 mM) was added in order to induce protein expression, and the culture was further performed for eight hours.

<Measurement of amount of styrene produced in culture fluid>

The culture fluid was centrifuged to separate a supernatant. Hexane was added to the supernatant and they were vigorously stirred. After centrifugation, the hexane layer was separated and analyzed by GC/MS to confirm the formation of styrene. The amount of styrene produced was 140 mg/L. The pMC indicative of the biomass ratio of the styrene (biomass-derived styrene) was 109%.

The biomass-derived styrenes prepared in Production Examples 5 to 9 were analyzed using NMR instrument AV400 (with data analysis software TOP SPIN2.1) available from BRUKER and confirmed to be styrene.

Production Example 10 (Production of biomass polybutadiene rubber (bio BR 1))

A polybutadiene rubber (biomass-derived rubber) was synthesized using as monomer a mixture of the biomass-derived butadienes (1,3-butadienes) prepared in Production Examples 1 to 4 as biomass-derived butadiene.

The chemicals used are listed below.

Ion-exchange water: in-house product
Potassium rosinate soap: a product of Harima Chemicals Group, Inc.
Sodium fatty acid soap: a product of FUJIFILM Wako Pure Chemical Corporation
Potassium chloride: a product of FUJIFILM Wako Pure Chemical Corporation
Condensation product of sodium naphthalenesulfonate and formaldehyde: a product of Kao Corporation
t-Dodecylmercaptan: tert-dodecylmercaptan (chain transfer agent) available from FUJIFILM Wako Pure Chemical Corporation
Sodium hydrosulfide: a product of FUJIFILM Wako Pure Chemical Corporation
$FeSo_4$: ferric sulfate available from FUJIFILM Wako Pure Chemical Corporation
EDTA: sodium ethylenediaminetetraacetate available from FUJIFILM Wako Pure Chemical Corporation
Rongalite: sodium formaldehyde sulfoxylate available from FUJIFILM Wako Pure Chemical Corporation
Polymerization initiator: paramenthane hydroperoxide available from NOF Corporation
Polymerization terminator: N,N-diethylhydroxylamine available from FUJIFILM Wako Pure Chemical Corporation
2,6-Di-t-butyl-p-cresol: Sumilizer BHT available from Sumitomo Chemical Co., Ltd.

<Synthesis of polybutadiene rubber>

A 50 L (interior volume) stainless steel polymerization reactor was cleaned, dried, and purged with dry nitrogen. Then, the reactor was charged with 5000 g of 1,3-butadiene, 5.74 g of t-dodecylmercaptan, 9688 g of an emulsifier (a mixture of ion-exchange water, potassium rosinate soap, sodium fatty acid soap, potassium chloride, and condensation product of sodium naphthalenesulfonate and formaldehyde), 6.3 mL of sodium hydrosulfide (1.8 M), 6.3 mL each of the activators ($FeSO_4$/EDTA/Rongalite), and 6.3 mL of the polymerization initiator (2.3 M), followed by polymerization at 10°C for three hours with stirring. After completion of the polymerization, 2.9 g of N,N-diethylhydroxylamine was added to the reaction mixture, and they were reacted for 30 minutes. The contents of the polymerization reactor were taken out and combined with 10 g of 2,6-di-t-butyl-p-cresol. After most of the water was evaporated off, the residue was dried under reduced pressure at 55°C for 12 hours to obtain a biobutadiene polymer (biomass polybutadiene rubber, bio BR 1). The pMC indicative of the biomass ratio of the bio BR was 105%.

Production Example 11 (Production of biomass polybutadiene rubber (bio BR 2))

A polybutadiene rubber (biomass-derived rubber) was synthesized as in Production Example 10, except that the biomass-derived butadiene used as monomer was the biomass-derived butadiene (1,3-butadiene) prepared in Production Example 1. Thus, a biobutadiene polymer (biomass polybutadiene rubber, bio BR 2) was obtained. The pMC indicative of the biomass ratio of the bio BR was 105%.

Production Example 12 (Production of biomass polybutadiene rubber (bio BR 3))

A polybutadiene rubber (biomass-derived rubber) was synthesized as in Production Example 10, except that the biomass-derived butadiene used as monomer was the biomass-derived butadiene (1,3-butadiene) prepared in Production Example 2. Thus, a biobutadiene polymer (biomass polybutadiene rubber, bio BR 3) was obtained. The pMC indicative of the biomass ratio of the bio BR was 108%.

Production Example 13 (Production of biomass polybutadiene rubber (bio BR 4))

A polybutadiene rubber (biomass-derived rubber) was synthesized as in Production Example 10, except that the biomass-derived butadiene used as monomer was the biomass-derived butadiene (1,3-butadiene) prepared in Production Example 3. Thus, a biobutadiene polymer (biomass polybutadiene rubber, bio BR 4) was obtained. The pMC indicative of the biomass ratio of the bio BR was 109%.

Production Example 14 (Production of biomass polybutadiene rubber (bio BR 5))

A polybutadiene rubber (biomass-derived rubber) was synthesized as in Production Example 10, except that the biomass-derived butadiene used as monomer was the biomass-derived butadiene (1,3-butadiene) prepared in Production Example 4. Thus, a biobutadiene polymer (biomass polybutadiene rubber, bio BR 5) was obtained. The pMC indicative of the biomass ratio of the bio BR was 108%.

Production Example 15 (Production of biomass styrene-butadiene rubber (bio SBR))

Bio SBR (biomass-derived rubber) was synthesized using as monomer a mixture of the biomass-derived butadienes (1,3-butadienes) prepared in Production Examples 1 to 4 as biomass-derived butadiene and a mixture of the biomass-derived styrenes prepared in Production Examples 5 to 9 as biomass-derived styrene.
The chemicals used are listed below.

Water: distilled water
Emulsifier (1): rosin acid soap available from Harima Chemicals Group, Inc.
Emulsifier (2): fatty acid soap available from FUJIFILM Wako Pure Chemical Corporation
Electrolyte: sodium phosphate available from FUJIFILM Wako Pure Chemical Corporation
Molecular weight regulator: tert-dodecylmercaptan available from FUJIFILM Wako Pure Chemical Corporation
Radical initiator: paramenthane hydroperoxide available from NOF Corporation
SFS: sodium formaldehyde sulfoxylate available from FUJIFILM Wako Pure Chemical Corporation
EDTA: sodium ethylenediaminetetraacetate available from FUJIFILM Wako Pure Chemical Corporation
Catalyst: ferric sulfate available from FUJIFILM Wako Pure Chemical Corporation
Polymerization terminator: N,N'-dimethyldithiocarbamate available from FUJIFILM Wako Pure Chemical Corporation
Alcohol: methanol, ethanol available from Kanto Chemical Co., Inc.
Formic acid: formic acid available from Kanto Chemical Co., Inc.

<Synthesis of styrene-butadiene rubber>

An amount of 200 g of water, 4.5 g of the emulsifier (1), 0.15 g of the emulsifier (2), 0.8 g of the electrolyte, 25 g of styrene, 75 g of butadiene, and 0.2 g of the molecular weight regulator were charged into a pressure-resistant reactor provided with a stirrer. The reactor temperature was set to 5°C. An aqueous solution containing 0.1 g of the radical initiator and 0.15 g of SFS dissolved therein and an aqueous solution containing 0.07 g of EDTA and 0.05 g of the catalyst dissolved therein were added to the reactor to initiate polymerization. Five hours after the initiation of polymerization, 0.2 g of the polymerization terminator was added to stop the reaction, whereby latex was prepared.

Unreacted monomers were removed from the latex by steam distillation. Then, the latex was added to the alcohol and coagulated by adding formic acid while adjusting the pH to 3 to 5 to give a crumb bio styrene-butadiene polymer. The polymer was dried with a vacuum dryer at 40°C to obtain a solid rubber (biomass styrene-butadiene rubber, bio SBR). The pMC indicative of the biomass ratio of the bio SBR was 108%.

The chemicals used in the examples and comparative examples are described below.

Bio SBR: SBR prepared in Production Example 15 (Mw/Mn: 3.2, styrene content: 8% by mass)
BR: BR150B (cis content: 97% by mass, vinyl content: 1% by mass) available from Ube Industries, Ltd.
Bio BR 1 to 5: BR 1 to BR 5 prepared in Production Examples 10 to 14 (cis content: 98% by mass, Mw: 400,000, Mw/Mn: 4.2)
NR: TSR20 (NR)
Rubber powder: PolyDyne 200 (containing, per 100 parts by mass of the rubber components, 46 parts by mass of carbon black and 15 to 18 parts by mass of silica, having an isoprene-derived unit content of 65% by mass and a butadiene-derived unit content of 35% by mass, each based on 100% by mass of the total units of the rubber components, containing 26% by mass of high-cis BR (cis content: 97% by mass) based on 100% by mass of the rubber components, and having a volume average particle size of 53 um, a 60-mesh sieve residue content of 0.1% by mass, a 80-mesh sieve residue content of 0.1% by mass, and an acetone extractable content of 7.2% by mass) available from Lehigh Technologies
Carbon black: DIABLACK N220 ($N_2SA$: 111 $m^2/g$) available from Mitsubishi Chemical Corporation
Silica: ULTRASIL VN3 ($N_2SA$: 175 $m^2/g$) available from Evonik Degussa
Rice husk silica: rice husk silica ($N_2SA$: 175 $m^2/g$) produced as described in JP 2019-38728 A
Oil: Diana Process AH-24 (aromatic process oil) available from Idemitsu Kosan Co., Ltd.
Silane coupling agent: Si266 (bis(3-triethoxysilylpropyl)disulfide) available from Evonik Degussa
Resin 1: Sylvatraxx 4401 (α-methylstyrene resin (copolymer of α-methylstyrene and styrene), softening point: 85°C) available from Arizona Chemical
Resin 2: Sylvatraxx 4150 (β-pinene resin, β-pinene content: 98% by mass or higher, softening point: 115°C) available from Arizona Chemical
Resin 3: Pinecrystal KR-85 (rosin resin, softening point: 80 to 87°C) available from Arakawa Chemical Industries, Ltd.
Resin 4: Marukarez M-890A (dicyclopentadiene resin, softening point: 105°C) available from Maruzen Petrochemical Co., Ltd.
Resin 5: ECR-373 (copolymer of C5 and C9 fractions (C5/C9 resin), softening point: 86°C) available from Exxon Mobil Corporation
Zinc oxide: zinc oxide #1 available from Mitsui Mining & Smelting Co., Ltd.
Stearic acid: stearic acid "TSUBAKI" available from NOF Corporation
Antioxidant 1: NOCRAC 6C (N-(1,3-dimethylbutyl)-N'-phenyl-p-phenylenediamine) available from Ouchi Shinko Chemical Industrial Co., Ltd.
Antioxidant 2: NONFLEX RD (poly(2,2,4-trimethyl-1,2-dihydroquinoline)) available from Seiko Chemical Co., Ltd.
Sulfur: HK-200-5 (5 mass% oil-containing powdered sulfur) available from Hosoi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (diphenylguanidine) available from Ouchi Shinko Chemical Industrial Co., Ltd.

(Examples and Comparative Examples)

According to the formulation recipe shown in Table 1 or 2, the materials other than the sulfur and vulcanization accelerators were kneaded for 5 minutes at 150°C using a 1.7 L Banbury mixer to give a kneaded mixture. The sulfur and vulcanization accelerators were then added to the kneaded mixture, followed by kneading for 5 minutes at 80°C using an open roll mill to give an unvulcanized rubber composition. The unvulcanized rubber composition was formed into a cap tread shape and assembled with other tire components to build an unvulcanized tire. The unvulcanized tire was press-vulcanized for 12 minutes at 150°C to prepare a test tire (size: 195/65R15).

The unvulcanized rubber compositions and test tires prepared as above were evaluated as described below. Tables 1 and 2 show the results. Here, the reference examples in Tables 1 and 2 are Comparative Example 1-1 and Comparative Example 2-1, respectively.

(tan δ)

Specimens were cut out of the cap tread of each test tire. Then, the tan δ at 0°C of the specimens (vulcanized rubber compositions) was measured using a viscoelastic spectrometer VES available from Iwamoto Seisakusho Co., Ltd. The measurement conditions are as described below. Besides the measured values, the results are expressed as an index relative to that of the reference example taken as 100. A higher index indicates better wet grip performance. An index of 45 or higher is considered good.
Measurement temperature: 0°C, Initial strain: 10%, Dynamic strain: 2%, and Frequency: 10 Hz

(Glass transition temperature (Tg))

Specimens were cut out of the cap tread of each test tire. The glass transition temperature (Tg) of the specimens (vulcanized rubber compositions) was measured with an automatic differential scanning calorimeter (DSC-60A, Shimadzu Corporation) at a rate of temperature increase of 10°C/min in accordance with JIS K7121 (2012).

(Processability)

The Mooney viscosity ($ML_{1+4}$/130°C) of each unvulcanized rubber composition was measured in accordance with JIS K6300-1: Rubber, unvulcanized - Physical property - Part 1: Determination of Mooney viscosity and pre-vulcanization characteristics with Mooney viscometer. In the measurement, a Mooney viscosity tester was preheated for one minute to 130°C, a small rotor was rotated at this temperature, and after a lapse of four minutes, the Mooney viscosity was measured. The measured Mooney viscosity of each composition is expressed as an index using the equation below, where the result of the reference example is set equal to 100. A higher index indicates a lower Mooney viscosity and better processability.

$$(ML_{1+4}\text{ index}) = (\text{Mooney viscosity of reference example})/(\text{Mooney viscosity of each composition}) \times 100$$

(Hardness (Hs))

Specimens were cut out of the cap tread of each test tire. Then, the Hs of the specimens was measured at a measurement temperature of 25°C using a type A durometer in accordance with JIS K6253: Rubber, vulcanized or thermoplastic - Determination of hardness. The results are expressed as an index relative to that of the reference example taken as 100. A higher index indicates a higher hardness. An index of 60 or higher is considered good.

(Tensile testing)

Samples were cut out of the cap tread of each test tire. Then, No. 3 dumbbell specimens were prepared from the samples and subjected to tensile testing at 23°C to measure the tensile strength at break (TB) and the elongation at break (EB) in accordance with JIS K6251 (2010). The results are expressed as an index relative to that of the reference example taken as 100. A higher index indicates a higher tensile strength. A TB index of 60 or higher is considered good.

[Table 1]

| | | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 | Comparative Example 1-1 | Comparative Example 1-2 | Comparative Example 1-3 |
|---|---|---|---|---|---|---|---|---|---|---|---|---|---|---|---|---|
| Amount (parts by mass) | BR | | | | | | | | | | | | | 100 | | 100 |
| | Bio BR 1 | 100 | 100 | 100 | 100 | 100 | | | | | 95 | 100 | 100 | | 100 | |
| | Bio BR 2 | | | | | | 100 | | | | | | | | | |
| | Bio BR 3 | | | | | | | 100 | | | | | | | | |
| | Bio BR 4 | | | | | | | | 100 | | | | | | | |
| | Bio BR 5 | | | | | | | | | 100 | | | | | | |
| | NR | | | | | | | | | | 5 | | | | | |
| | Rubber powder | | | | | | | | | | | | 4 | | | |
| | Carbon black | 5 | 5 | 5 | 5 | 5 | 5 | 5 | 5 | 5 | 5 | 5 | 5 | 5 | 5 | 5 |
| | Silica | 120 | 120 | 120 | 120 | 120 | 120 | 120 | 120 | 120 | 120 | | 120 | 120 | 120 | 120 |
| | Rice husk silica | | | | | | | | | | | 120 | | | | |
| | Oil | 13 | 13 | 13 | 13 | 13 | 13 | 13 | 13 | 13 | 13 | 13 | 13 | 18 | 13 | 13 |
| | Silane coupling agent | 9.6 | 9.6 | 9.6 | 9.6 | 9.6 | 9.6 | 9.6 | 9.6 | 9.6 | 9.6 | 9.6 | 9.6 | 9.6 | 9.6 | 9.6 |
| | Resin 1 | 70 | | | | | 70 | 70 | 70 | 70 | 70 | 70 | 70 | 70 | | |
| | Resin 2 | | 70 | | | | | | | | | | | | | |
| | Resin 3 | | | 70 | | | | | | | | | | | | |
| | Resin 4 | | | | 70 | | | | | | | | | | | |
| | Resin 5 | | | | | 70 | | | | | | | | | | |
| | Zinc oxide | 3 | 3 | 3 | 3 | 3 | 3 | 3 | 3 | 3 | 3 | 3 | 3 | 3 | 3 | 3 |
| | Stearic acid | 4 | 4 | 4 | 4 | 4 | 4 | 4 | 4 | 4 | 4 | 4 | 4 | 4 | 4 | 4 |
| | Antioxidant 1 | 1 | 1 | 1 | 1 | 1 | 1 | 1 | 1 | 1 | 1 | 1 | 1 | 1 | 1 | 1 |
| | Antioxidant 2 | 1 | 1 | 1 | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 |
| | Vulcanization accelerator 2 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Evaluation | tan δ (0°C) | 1.44 | 1.36 | 1.57 | 1.14 | 0.38 | 1.53 | 1.46 | 1.56 | 1.50 | 1.47 | 1.34 | 1.43 | 0.82 | 0.43 | 0.242 |
| | Tg (0°C) | -17 | -16.1 | -4.7 | -10.7 | -34.4 | -15.9 | -16.7 | -15.6 | -16.3 | -14.3 | -16.8 | -17 | -17.9 | -48.2 | -49.1 |
| | $ML_{1+4}$ index | 203 | 178 | 245 | 165 | 176 | 217 | 210 | 206 | 205 | 207 | 188 | 202 | 100 | 69 | 34 |
| | Hs index | 100 | 99 | 95 | 107 | 117 | 100 | 108 | 106 | 103 | 100 | 102 | 100 | 100 | 132 | 132 |
| | TB index | 118 | 108 | 85 | 63 | 103 | 121 | 126 | 128 | 128 | 117 | 131 | 101 | 100 | 151 | 128 |
| | EB index | 135 | 133 | 183 | 171 | 149 | 144 | 145 | 148 | 146 | 135 | 154 | 122 | 100 | 59 | 44 |
| | tan δ (0°C) index | 176 | 167 | 193 | 140 | 50 | 187 | 179 | 191 | 183 | 180 | 164 | 175 | 100 | 52 | 30 |

[Table 2]

| | | Comparative Example 2-1 | Example 2-1 | Example 2-2 | Example 2-3 |
|---|---|---|---|---|---|
| Amount (parts by mass) | Bio SBR | 20 | 20 | 20 | 20 |
| | BR | 80 | | | |
| | Bio BR 1 | | 80 | 80 | 80 |
| | Carbon black | 5 | 5 | 5 | 5 |
| | Silica | 120 | 120 | 60 | 120 |
| | Oil | 18 | 13 | 13 | 13 |
| | Silane coupling agent | 9.6 | 9.6 | 4.8 | 9.6 |
| | Resin 1 | 70 | 70 | 70 | 40 |
| | Zinc oxide | 3 | 3 | 3 | 3 |
| | Stearic acid | 4 | 4 | 4 | 4 |
| | Antioxidant 1 | 1 | 1 | 1 | 1 |
| | Antioxidant 2 | 1 | 1 | 1 | 1 |
| | Sulfur | 1.5 | 1.5 | 1.5 | 1.5 |
| | Vulcanization accelerator 1 | 2 | 2 | 2 | 2 |
| | Vulcanization accelerator 2 | 2.5 | 2.5 | 2.5 | 2.5 |
| Evaluation | tan δ (0°C) | 1.01 | 1.57 | 1.40 | 1.00 |
| | Tg (0°C) | −15 | −14.4 | −15.2 | −27.1 |
| | $ML_{1+4}$ index | 100 | 172 | 241 | 155 |
| | Hs index | 100 | 100 | 66 | 76 |
| | TB index | 100 | 113 | 106 | 121 |
| | EB index | 100 | 124 | 145 | 106 |
| | tan δ (0°C) index | 100 | 155 | 139 | 93 |

As shown in Tables 1 and 2, the examples had a percent modern carbon (pMC) of components based on butadiene and/or aromatic vinyls of 30% or higher as measured in accordance with ASTM D6866-10, a butadiene-derived unit content of 80 to 100% by mass based on 100% by mass of the total units of the rubber components, and an aromatic vinyl-derived unit content of 0 to 20% by mass based on 100% by mass of the total units of the rubber components, and contained 10 to 100 parts by mass of at least one resin per 100 parts by mass of the rubber components, and they enabled a reduction in the use of raw materials derived from fossil fuels in consideration of the environment while also improving the required properties of tires, such as wet grip performance and tensile strength.

As shown by comparison between Example 1-1 and Comparative Examples 1-1 to 1-3, the overall performance in terms of wet grip performance and tensile strength (expressed as the sum of two indices of wet grip performance and tensile strength) was synergistically improved by combining a resin and rubber components in which the biomass ratio of components based on butadiene and/or aromatic vinyls was high, and further the butadiene-derived unit content was high.

REFERENCE SIGNS LIST

21 alcohol feed pipe (raw material feed pipe)
22 heater (electric furnace)
23 dehydration column
24 cooler
25 heater
26 second reaction column
27 cooler
28 circulation line

(Sequence listing free text)

SEQ ID NO:1: upstream primer (encP-U-Nde)
SEQ ID NO:2: downstream primer (encP-L-Bam)
SEQ ID NO:3: upstream primer (FDC1-gU)
SEQ ID NO:4: downstream primer (FDC1-gL)
SEQ ID NO:5: upstream primer (FDC1-nU-BspHI)
SEQ ID NO:6: downstream primer (FDC1-nL-Hind)
SEQ ID NO:7: upstream primer (PAD1-gU)
SEQ ID NO:8: downstream primer (PAD1-gL)
SEQ ID NO:9: upstream primer (PAD1-nU-Nde)
SEQ ID NO:10: downstream primer (PAD1-nL-Xho)

## Claims

**1.** A passenger car tire, comprising a tire component comprising a passenger car tire rubber composition, the rubber composition having

a percent modern carbon (pMC) of components based on butadiene and/or aromatic vinyls of 30% or higher as measured in accordance with ASTM D6866-10,
a butadiene-derived unit content of 80 to 100% by mass based on 100% by mass of total units of rubber components, and
an aromatic vinyl-derived unit content of 0 to 20% by mass based on 100% by mass of the total units of the rubber components,
the rubber composition comprising 10 to 100 parts by mass of at least one resin per 100 parts by mass of the rubber components.

**2.** The passenger car tire according to claim 1,

wherein the rubber composition has
a percent modern carbon (pMC) of rubber components as a whole of 30% or higher as measured in accordance with ASTM D6866-10,
a butadiene-derived unit content of 80 to 99% by mass based on 100% by mass of the total units of the rubber components,
an aromatic vinyl-derived unit content of 0 to 19% by mass based on 100% by mass of the total units of the rubber components, and
an isoprene-derived unit content of 1 to 10% by mass based on 100% by mass of the total units of the rubber components.

**3.** The passenger car tire according to one of claims 1 or 2,
wherein the aromatic vinyl is styrene.

**4.** The passenger car tire according to any one of claims 1 to 3,
wherein the rubber composition comprises an aromatic vinyl/butadiene copolymer having an aromatic vinyl-derived unit content of 10% by mass or less.

**5.** The passenger car tire according to any one of claims 1 to 4,
wherein the rubber composition has a natural rubber content of 0.1 to 10% by mass based on 100% by mass of the rubber components.

**6.** The passenger car tire according to any one of claims 1 to 5,
wherein the rubber composition has a tan $\delta$ at 0°C of 0.18 to 1.60 and a Tg of -85°C to -5°C.

**7.** The passenger car tire according to any one of claims 1 to 6,
wherein the resin is at least one selected from the group consisting of terpene resins and rosin resins.

**8.** The passenger car tire according to any one of claims 1 to 7, wherein the resin is at least one selected from the group consisting of cyclopentadiene resins, C5 resins, C5/C9 resins, and C9 resins.

**9.** The passenger car tire according to any one of claims 1 to 8, wherein the resin is an aromatic resin.

**10.** The passenger car tire according to any one of claims 1 to 9, wherein the resin is modified with a polar functional group interactive with silica.

**11.** The passenger car tire according to any one of claims 1 to 10, wherein the rubber composition comprises rice husk-derived silica.

**12.** The passenger car tire according to any one of claims 1 to 11, wherein the rubber composition comprises a rubber powder.

**13.** The passenger car tire according to any one of claims 1 to 12, wherein the rubber composition has a silica content of 80 parts by mass or more per 100 parts by mass of the rubber components.

**14.** The passenger car tire according to any one of claims 1 to 13, wherein the rubber composition has a resin content of 50 parts by mass or more per 100 parts by mass of the rubber components.

**15.** The passenger car tire according to any one of claims 1 to 14, wherein the tire component is a tread.

**Patentansprüche**

**1.** Personenkraftwagenreifen, umfassend eine Reifenkomponente, die eine Personenkraftwagenreifen-Kautschukzusammensetzung umfasst, wobei die Kautschukzusammensetzung aufweist:

einen prozentualen Anteil modernen Kohlenstoffs (pMC) von Komponenten, die auf Butadien und/oder Vinylaromaten basieren, von 30% oder höher, wie gemäß ASTM D6866-10 gemessen,
einen Gehalt an von Butadien abgeleiteten Einheiten von 80 bis 100 Massen-%, basierend auf 100 Massen-% an gesamten Einheiten von Kautschukkomponenten, und
einen Gehalt an von Vinylaromaten abgeleiteten Einheiten von 0 bis 20 Massen-%, basierend auf 100 Massen-% der gesamten Einheiten der Kautschukkomponenten,
wobei die Kautschukzusammensetzung 10 bis 100 Massenteile mindestens eines Harzes pro 100 Massenteile der Kautschukkomponenten umfasst.

**2.** Personenkraftwagenreifen nach Anspruch 1, wobei die Kautschukzusammensetzung aufweist:

einen prozentualen Anteil modernen Kohlenstoffs (pMC) von Kautschukkomponenten insgesamt von 30% oder höher, wie gemäß ASTM D6866-10 gemessen,
einen Gehalt an von Butadien abgeleiteten Einheiten von 80 bis 99 Massen-%, basierend auf 100 Massen-% der gesamten Einheiten der Kautschukkomponenten,
einen Gehalt an von Vinylaromaten abgeleiteten Einheiten von 0 bis 19 Massen-%, basierend auf 100 Massen-% der gesamten Einheiten der Kautschukkomponenten, und
einen Gehalt an von Isopren abgeleiteten Einheiten von 1 bis 10 Massen-%, basierend auf 100 Massen-% der gesamten Einheiten der Kautschukkom ponenten.

**3.** Personenkraftwagenreifen nach einem der Ansprüche 1 oder 2, wobei der Vinylaromat Styrol ist.

**4.** Personenkraftwagenreifen nach einem der Ansprüche 1 bis 3,

wobei die Kautschukzusammensetzung ein Vinylaromat/Butadien-Copolymer umfasst, das einen Gehalt an von Vinylaromaten abgeleiteten Einheiten von 10 Massen-% oder weniger aufweist.

**5.** Personenkraftwagenreifen nach einem der Ansprüche 1 bis 4,
wobei die Kautschukzusammensetzung einen Naturkautschukgehalt von 0,1 bis 10 Massen-% aufweist, basierend auf 100 Massen-% der Kautschukkomponenten.

**6.** Personenkraftwagenreifen nach einem der Ansprüche 1 bis 5,
wobei die Kautschukzusammensetzung einen tan $\delta$ bei 0°C von 0,18 bis 1,60 und eine Tg von -85°C bis -5°C aufweist.

**7.** Personenkraftwagenreifen nach einem der Ansprüche 1 bis 6,
wobei das Harz mindestens eines ist, welches ausgewählt ist aus der Gruppe bestehend aus Terpenharzen und Kolophoniumharzen.

**8.** Personenkraftwagenreifen nach einem der Ansprüche 1 bis 7,
wobei das Harz mindestens eines ist, welches ausgewählt ist aus der Gruppe bestehend aus Cyclopentadienharzen, C5-Harzen, C5/C9-Harzen und C9-Harzen.

**9.** Personenkraftwagenreifen nach einem der Ansprüche 1 bis 8,
wobei das Harz ein aromatisches Harz ist.

**10.** Personenkraftwagenreifen nach einem der Ansprüche 1 bis 9,
wobei das Harz mit einer polaren funktionellen Gruppe modifiziert ist, die mit Siliciumdioxid wechselwirkt.

**11.** Personenkraftwagenreifen nach einem der Ansprüche 1 bis 10,
wobei die Kautschukzusammensetzung aus Reishülsen stammendes Siliciumdioxid umfasst.

**12.** Personenkraftwagenreifen nach einem der Ansprüche 1 bis 11,
wobei die Kautschukzusammensetzung ein Kautschukpulver umfasst.

**13.** Personenkraftwagenreifen nach einem der Ansprüche 1 bis 12,
wobei die Kautschukzusammensetzung einen Siliciumdioxidgehalt von 80 Massenteilen oder mehr pro 100 Massenteile der Kautschukkomponenten aufweist.

**14.** Personenkraftwagenreifen nach einem der Ansprüche 1 bis 13,
wobei die Kautschukzusammensetzung einen Harzgehalt von 50 Massenteilen oder mehr pro 100 Massenteile der Kautschukkomponenten aufweist.

**15.** Personenkraftwagenreifen nach einem der Ansprüche 1 bis 14,
wobei die Reifenkomponente ein Laufstreifen ist.

**Revendications**

**1.** Pneumatique pour voiture particulière, comprenant un composant de pneumatique comprenant une composition de caoutchouc de pneumatique pour voiture particulière, la composition de caoutchouc ayant

un pourcentage de carbone moderne (pMC) de composants à base de butadiène et/ou vinyles aromatiques de 30 % ou plus, tel que mesuré selon la norme ASTM D6866-10,
une teneur d'unité dérivée de butadiène de 80 à 100 % en masse sur la base de 100 % en masse d'unités totales de composants de caoutchouc, et
une teneur d'unité dérivée de vinyle aromatique de 0 à 20 % en masse sur la base de 100 % en masse des unités totales des composants de caoutchouc,
la composition de caoutchouc comprenant 10 à 100 parts en masse d'au moins une résine pour 100 parts en masse des composants de caoutchouc.

**2.** Pneumatique pour voiture particulière selon la revendication 1,
dans lequel la composition de caoutchouc a :

un pourcentage de carbone moderne (pMC) de composants de caoutchouc dans son ensemble de 30 % ou plus, tel que mesuré selon la norme ASTM D6866-10,
une teneur d'unité dérivée de butadiène de 80 à 99 % en masse sur la base de 100 % en masse des unités totales des composants de caoutchouc,
une teneur d'unité dérivée de vinyle aromatique de 0 à 19 % en masse sur la base de 100 % en masse des unités totales des composants de caoutchouc, et
une teneur d'unité dérivée d'isoprène de 1 à 10 % en masse sur la base de 100 % en masse des unités totales des composants de caoutchouc.

**3.** Pneumatique pour voiture particulière selon l'une des revendications 1 ou 2,
dans lequel le vinyle aromatique est un styrène.

**4.** Pneumatique pour voiture particulière selon l'une quelconque des revendications 1 à 3,
dans lequel la composition de caoutchouc comprend un copolymère vinyle aromatique/butadiène ayant une teneur d'unité dérivée de vinyle aromatique de 10 % en masse ou moins.

**5.** Pneumatique pour voiture particulière selon l'une quelconque des revendications 1 à 4,
dans lequel la composition de caoutchouc a une teneur en caoutchouc naturel de 0,1 à 10 % en masse sur la base de 100 % en masse des composants de caoutchouc.

**6.** Pneumatique pour voiture particulière selon l'une quelconque des revendications 1 à 5,
dans lequel la composition de caoutchouc a une valeur tan $\delta$ à 0 °C de 0,18 à 1,60 et une valeur Tg de -85 °C à -5 °C.

**7.** Pneumatique pour voiture particulière selon l'une quelconque des revendications 1 à 6,
dans lequel la résine est au moins une résine sélectionnée parmi le groupe constitué de résines de terpène et de résines de colophane.

**8.** Pneumatique pour voiture particulière selon l'une quelconque des revendications 1 à 7,
dans lequel la résine est au moins une résine sélectionnée parmi le groupe constitué de résines de cyclopentadiène, de résine C5, de résine C5/C9, et de résines C9.

**9.** Pneumatique pour voiture particulière selon l'une quelconque des revendications 1 à 8,
dans lequel la résine est une résine aromatique.

**10.** Pneumatique pour voiture particulière selon l'une quelconque des revendications 1 à 9,
dans lequel la résine est modifiée par un groupe fonctionnel polaire interactif avec de la silice.

**11.** Pneumatique pour voiture particulière selon l'une quelconque des revendications 1 à 10,
dans lequel la composition de caoutchouc comprend une silice dérivée de coques de riz.

**12.** Pneumatique pour voiture particulière selon l'une quelconque des revendications 1 à 11,
dans lequel la composition de caoutchouc comprend une poudre de caoutchouc.

**13.** Pneumatique pour voiture particulière selon l'une quelconque des revendications 1 à 12,
dans lequel la composition de caoutchouc a une teneur en silice de 80 parts en masse ou plus pour 100 parts en masse des composants de caoutchouc.

**14.** Pneumatique pour voiture particulière selon l'une quelconque des revendications 1 à 13,
dans lequel la composition de caoutchouc a une teneur en résine de 50 parts en masse ou plus pour 100 parts en masse des composants de caoutchouc.

**15.** Pneumatique pour voiture particulière selon l'une quelconque des revendications 1 à 14,
dans lequel le composant de caoutchouc est une bande de roulement.

Fig.1

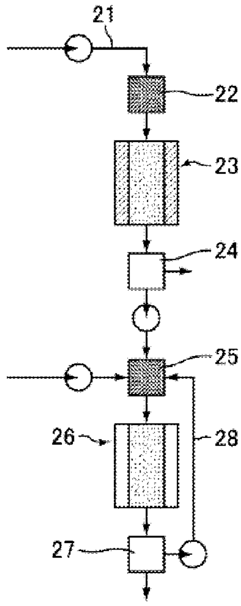
21
22
23
24
25
26
28
27

Fig.2

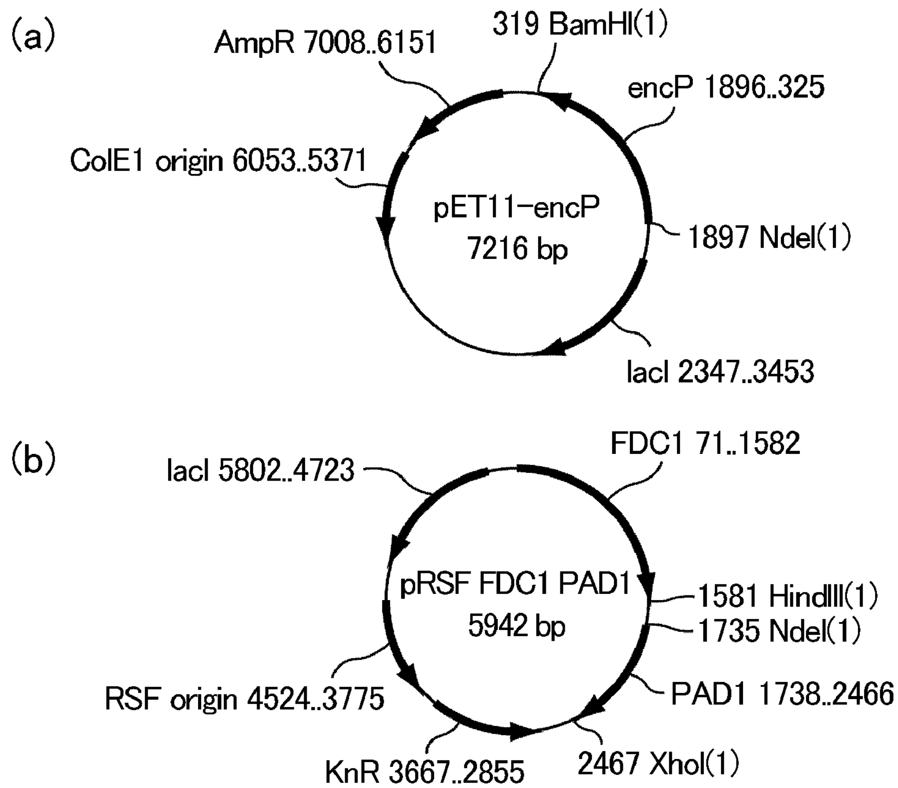
(a)
AmpR 7008..6151
319 BamHI(1)
encP 1896..325
ColE1 origin 6053..5371
pET11-encP
7216 bp
1897 NdeI(1)
lacI 2347..3453
(b)
lacI 5802..4723
FDC1 71..1582
pRSF FDC1 PAD1
5942 bp
1581 HindIII(1)
1735 NdeI(1)
RSF origin 4524..3775
PAD1 1738..2466
KnR 3667..2855
2467 XhoI(1)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014051617 A
- JP 2010508017 T
- JP 2011522563 T
- JP S62285779 A
- JP 2010115116 A
- JP 2004306011 A
- JP 2019154435 A
- JP 2011526489 T
- JP 2019038728 A
- JP S60115532 A


### Non-patent literature cited in the description


- **SYU M.J.** *Appl. Microbial Biotechnol.,* 2001, vol. 55, 10-18
- **QIN et al.** *Chinese J. Chem. Eng.,* 2006, vol. 14 (1), 132-136
- **SONI et al.** *Appl. Microbiol. Biotechnol.,* 1987, vol. 27, 1-5
- Butadiene. **KIRSHENBAUM, I.** Encyclopedia of Chemical Technology. John Wiley & Sons, 1978, vol. 4, 313-337
- **GAMBORG O.L. ; MILLER R. A ; OJIMA K.** *Experimental Cell Research,* 1968, vol. 50, 151-158